(19) Europäisches Patentamt
European Patent Office
Office européen des brevets

(11) Veröffentlichungsnummer: **0 068 162 B1**

(12) **EUROPÄISCHE PATENTSCHRIFT**

(45) Veröffentlichungstag der Patentschrift: **15.10.86**

(51) Int. Cl.[4]: **C 08 L 61/32,** C 08 L 61/20, C 08 L 67/00, C 08 J 3/16, D 21 H 3/48

(21) Anmeldenummer: **82104805.5**

(22) Anmeldetag: **02.06.82**

# (54) Modifizierter Aminoplast, seine Herstellung und seine Verwendung.

(30) Priorität: **30.06.81 DE 3125615**

(43) Veröffentlichungstag der Anmeldung: **05.01.83 Patentblatt 83/1**

(45) Bekanntmachung des Hinweises auf die Patenterteilung: **15.10.86 Patentblatt 86/42**

(84) Benannte Vertragsstaaten: **AT BE DE FR GB IT NL SE**

(56) Entgegenhaltungen:
**EP-A-0 004 053**
**AT-A-180 407**
**CH-A-578 934**
**US-A-3 394 093**

**Die Akte enthält technische Angaben, die nach dem Eingang der Anmeldung eingereicht wurden und die nicht in dieser Patentschrift enthalten sind.**

(73) Patentinhaber: **CASSELLA Aktiengesellschaft, Hanauer Landstrasse 526, D-6000 Frankfurt am Main 61 (DE)**

(72) Erfinder: **Dörries, Peter, Hansa- Allee 80, D-6000 Frankfurt am Main 61 (DE)**
Erfinder: **Götze, Thomas, Hasenpfad 20, D-6232 Neuenhain (DE)**
Erfinder: **Piesch, Steffen, Dr., An der Heide 32, D-6370 Oberursel (DE)**
Erfinder: **Schön, Manfred, Dr., Saalburgring 5, D-6054 Rodgau 2 (DE)**
Erfinder: **Wulff, Günther, Rodelberg 34, D-2071 Hoisdorf (DE)**
Erfinder: **Hintermeier, Karl, Dr., Hünfelder Strasse 18, D-6000 Frankfurt am Main 61 (DE)**

(74) Vertreter: **Urbach, Hans- Georg, Dr., Hanauer Landstrasse 526, D-6000 Frankfurt am Main 61 (DE)**

**EP 0 068 162 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft einen modifizierten Aminoplasten, der sich insbesondere zum Tränken von Papier- bzw. Gewebebahnen bei der Herstellung von beschichteten Holzverkstoffen oder Schichtstoffen eignet. Die Erfindung betrifft ferner ein Verfahren zur Herstellung des modifizierten Aminoplasten sowie seine Verwendung zur Herstellung beschichteter Holzwerkstoffe oder Schichtstoffe.

Aminoplaste sind harzartige produkte und deren Lösungen, die durch Kondensation von Amino- oder Iminogruppen enthaltenden Verbindungen, den sogenannten Aminoplastbildnern, und Carbonylverbindungen und ggf. einem niederen Alkanol entstehen.

Beispiele für bekannte Aminoplastbildner sind Melamin, Harnstoff, Thioharnstoff, Dicyandiamid und Aceto- oder Benzoguanamin.

Carbonylverbindungen, die sich bekanntlich für die Umsetzung mit den Aminoplastbildnern eignen, sind aliphatische oder aromatische Aldehyde und Ketone, wie z.B. Formaldehyd, Acetaldehyd, Propionaldehyd, Butyraldehyd, Isobutylaldehyd, Benzaldehyd, Aceton und Methylethylketon.

Auch Mischungen verschiedener Aminoplastbildner und verschiedener Carbonylverbindungen können zur Herstellung von Aminoplasten eingesetzt werden.

Besonders vorteilhafte und daher häufig eingesetzte Aminoplastbildner sind Harnstoff und Melamin; besonders häufig eingesetzte Carbonylverbindung ist der Formaldehyd.

Niedere Alkanole, die bei der Umsetzung von Aminoplastbildnern und den Carbonylverbindungen zugegen sein können, 1 Sind solche mit 1 bis 6 C-kromen; für die Herstellung sogenannter Trankharze für die Oberflächenveredelung von z.B. Holzwerkstoffen oder Schichtpreßstoffen werden die niederen Vertreter dieser Gruppe, Ethanol und insbesondere Methanol bevorzugt.

Die Reaktion zwischen den Aminoplastbildnern, den Carbonylverbindungen und gegebenenfalls dem Alkanol wird dabei nur soweit durchgeführt, daß die Produkte noch löslich und schmelzbar bleiben. Sobald dieser Zustand erreicht ist, wird die Kondensation abgebrochen, z.B. durch Abkühlen und Einstellen eines schwach alkalischen pH-Wertes der Reaktionsmischung. Die so hergestellten, nicht auskondensierten Aminoplaste (auch Aminoplastvorkondensate genannt) werden in Form ihrer wäßrigen Lösungen, insbesondere als Tränkharze, für die Schichtpreßstoff-Industrie und zur Oberflächenveredelung von Holzwerkstoffen benutzt.

Bei der Oberflächenveredelung von Holzwerkstoffen vird auf Holzfaser- oder Holzspanplatten eine Dekor- bzw. Schutzschicht dadurch aufgebracht, daß dekorative Papier- bzw. Gevebebahnen mit geeigneten Aminoplasten, vorzugsweise Melaminharzen, getränkt und mit einem bestimmten Restfeuchtegehalt auf die Platten des Holzwerkstoffs durch Thermohärtung auflaminiert werden. Der Preßdruck kann dabei etwa 10 bis 100 bar (1 bar= $10^5$ Pa = 1 $kg/cm^2$) und die Temperatur etwa 120 bis 180°C betragen. Während des Preßvorgangs härtet der Aminoplast aus und verbindet die Papier- bzw. Gewebebahn mit der Platte des Holzwerkstoffs. In ähnlicher Weise lassen sich Schichtstoffe mit dekorativer bzw. schützender Oberfläche herstellen. Hierbei wird die aminoplastharzgetrankte Dekorbahn auf mehrere Lagen phenolharzimprägnierter Kraftpapiere durch Thermohärtung aufgepreßt. Die Preßdrucke liegen hierbei im Bereich von ca. 50 bis 150 bar, während die Preßtemperaturen wie bei der dekorativen Beschichtung von Holzverkstoffen etwa 120 bis 180°C betragen. Zur Erhöhung der Kratz- und Abriebfestigkeit vird vor dem Verpressen auf die Dekorbahn ein aminoplastharzgetränktes, transparentes sogenanntes Overlay-Papier aufgelegt. Zwischen Dekorbahn und Kern kommt manchmal noch ein Barrierepapier und auf der Rückseite ein Gegenzugpapier zur Anwendung. Für die Tränkung der Overlay- und der Dekorbahn kommen vorzugsweise Melamin-Formaldehyd-Harze zur Anwendung. Auch bei der Oberflächenveredelung von Holzwerkstoffen können Overlay- und Barrierepapiere zur Anwendung kommen.

Das Pressen kann nach verschiedenen Methoden erfolgen. Üblich sind z.B. der Einsatz von Mehretagenpressen, wobei die Pressung bei 120 bis 160°C im Verlauf von ca. 5 bis 10 Minuten erfolgt und vor der Entnahme der Platten auf Temperaturen von 70 bis 100°C zurückgekühlt wird. Mit diesem Verfahren lassen sich auch unter Einsatz bekannter Harze bereits Oberflächen mit höchstem Glanzgrad herstellen. Nachteilig ist die lange Aufheiz- und Rückkühlungsdauer, die zu langen Preßzyklen führt und das Verfahren verteuert. Beim sogenannten Kurztaktverfahren wird jeweils nur eine Etage gepreßt. Die Pressung erfolgt hierbei bei 120 bis 160°C im Verlauf von nur 30 bis 120 Sekunden, und das Produkt wird ohne Rückkühlung der Presse entnommen. Der Preßzyklus ist hierbei zwar kurz und kostengünstig, jedoch war es bisher unter Einsatz bekannter Harze nicht möglich, den gleichen hohen Oberflächenglanz zu erzeugen wie beim Mehretagenprozeß mit Rückkühlung.

Ein besonders gravierender Nachteil des ansonsten anwendungstechnisch und ökonomisch sehr vorteilhaften "Kurztaktverfahrens" ist, daß damit unter Verwendung bekannter Tränkharze höchste Glanzgrade der Oberflächen nicht zu erzielen sind. Solche hochglänzenden Oberflächen konnten bisher nur in Mehretagenpressen unter Rückkühlung erzielt werden.

Ein neues Produktionsverfahren ist die kontinuierliche Herstellung sogenannter Melamin-Endloslaminate auf Doppelbandpressen. Hierbei wird die Dekorbahn zwischen zwei Stahlbändern unter Druck- (10 bis 30 bar) und Temperatureinwirkung (130 bis 170°C) auf ein geeignetes Trägermaterial, wie z.B. Vulkanfiber, oder sogenannte Möbelpergamente, aufgepreßt.

Bei dieser Verarbeitung der Aminoplaste erfolgt ein Übergang der löslichen und schmelzbaren Aminoplastvorkondensate in unschmelzbare und unlösliche Produkte. Bei dieser Aushärtung tritt eine Vernetzung ein. Die Geschwindigkeit dieser Vernetzungsreaktion ist jedoch auch bei den erhöhten

Verarbeitungstemperaturen für anwendungstechnische Prozesse in der Regel zu gering und muß daher durch Zusätze von sogenannten Härtern beschleunigt werden. Insbesondere ist die Durchführung des Kurztaktprozesses nur in Gegenwart wirksamer Härter in Mengen von etwa 0,05 bis 1 % möglich. Als Härter werden sauer reagierende und/oder säureabspaltende Verbindungen verwendet. Derartige Härter sind beispielsweise Ammonium- oder Aminsalze wie z.B. Ammoniumchlorid, Ammoniumrhodanid, Ethanolaminhydrochlorid oder starke organische Säuren wie z.B. p-Toluolsulfonsäure. Bei der Verwendung freier Säuren oder stark sauer reagierender Salze ergeben sich für das Aminoplastharz relativ geringe Topfzeiten, wodurch die Verarbeitung beeinträchtigt wird.

Die vernetzten Aminoplaste bilden je nach der Art und Weise, in der die Aushärtung vorgenommen wird, harte bis sehr harte, glänzende bis hochglänzende und chemikalien- und hitzebeständige Oberflächen. Beschichtete Holzwerkstoffe und Schichtstoffe zeichnen sich daher durch ihre guten chemischen und Physikalischen Eigenschaften aus. Die zum Tränken der für die Dekor- bzw. Schutzschicht vorgesehenen Papier- bzw. Gewebebahnen benutzten, nicht elastifizierten Aminoplaste besitzen jedoch im ausgehärteten Zustand nur eine geringe Elastizität, weshalb mit diesen Harzen hergestellte Oberflächen zur Rißbildung neigen.

Bei der Verarbeitung der Aminoplastharze nach den oben beschriebenen Verfahren kommt es jedoch nicht allein auf die Eigenschaften des Produkts an, sondern das Aminoplastharz muß auch in Gegenwart eines Härters bei Raumtemperatur eine ausreichende Haltbarkeit aufweisen, soll jedoch bei erhöhter Temperatur möglichst rasch aushärten, es soll eine gute Toleranz gegen Überhärtung aufweisen, auch nach dem oben genannten Kurztaktverfahren hochglänzende Oberflächen liefern, es darf bei der Verarbeitung nicht "stauben", nicht an den Preßblechen kleben und keine Beschläge auf den Preßblechen abscheiden.

Ein gutes Aminoplastharz sollte nach Möglichkeit eine Kombination aller genannten Eigenschaften aufweisen und qualitativ hochwertige Verarbeitungsergebnisse ergeben. Die Forderungen an Aminoplastharze sind daher überaus vielfältig und durch unmodifizierte Harze nicht zu erfüllen. So hat es z.B. nicht an Versuchen gefehlt, die mangelnde Elastizität der Aminoplast-Dekorschicht durch Modifizierung, d.h. durch Zusätze zu den Tränkharzen, zu beseitigen oder zu verringern. Insbesondere wurden als Zusätze Polyalkohole, Sorbit und Zucker sowie aromatische Sulfonamide empfohlen. Beim Zusatz von Polyalkoholen oder Zuckern wird jedoch die Wasserfestigkeit der ausgehärteten Harze ungenügend, wenn die Elastizität ausreichend sein soll. Sulfonamide allein reichen zur Erzielung einer guten Elastizität nicht aus.

Bei einem Zusatz von Caprolactam als Modifizierungsmittel zur Erhöhung der Elastizität der fertigen Oberflächen können den Tränkharzen verhältnismäßig hohe Härtermengen zugefügt werden und dabei trotzdem eine hinreichend lange Gebrauchsdauer vor der Verwendung erzielt werden. Unbefriedigend ist jedoch die nicht sehr gute Elastizitätsreserve, die verminderte Wasserfestigkeit und ein ungleichmäßiger Glanz der damit hergestellten Oberflächen.

Es ist bekannt (DE-OS 21 49 970), daß die Rißbildung in der Oberfläche von Holzwerkstoffen und Schichtpreßstoffen beseitigt, d.h. ihre Elastizität erhöht werden kann, wenn die für die Dekor- bzw. Schutzschicht vorgesehenen Papier- bzw. Gewebebahnen mit einem mit Methylen-bis-formamid modifizierten Aminoplastharz getränkt und anschließend in an sich bekannter Weise auf Holzwerkstoffplatten auflaminiert oder zu einem Schichtpreßstoff verarbeitet werden. Auch bei der Verwendung methylenbisformamidmodifizierter Aminoplastharze als sogenannte Kurztaktharze, d.h. solcher Tränkharze, die sich für den Zusatz großer Härtermengen oder härtungsbeschleunigender Zusätze und damit für die besonders rasche Aushärtung bzw. Verarbeitung eignen, erfolgt die Ausbildung eines gleichmäßigeren Glanzes der vergüteten Oberflächen. In der Praxis hat sich jedoch gezeigt, daß bei einer längegeren Lagerung methylenbisformamidmodifizierter Aminoplastharze ihre anwendungstechnischen Vorteile, insbesondere die Rißbeständigkeit, teilweise wieder verlorengehen.

Auf dem Gebiet der wäßrigen Lacke zur Herstellung schützender Lackschichten, inbesondere auf Metallteilen, wie z.B. Autokarosserien und dergleichen, durch das sogenannte electro coating Verfahren sind wäßrige Systeme bekannt (vgl. z.B. "Lacke und Lösemittel" (1979), Verlag Chemie, Weinheim, New York, Seiten 35 und 36, rechte Spalte; A.Bachmann und T.Bertz "Aminoplaste", VEB Deutscher Verlag für Grundstoffindustrie; US-PS 3 102 868 sowie ein entsprechender Hinweis in DE-OS 26 27 926), die überwiegend aus wasserlöslichen Polyestern bestehen und als Vernetzer eine Beimischung von Aminoplastharzen enthalten. Überzüge aus diesen Lacken werden durch Strahlungshitze ausgehärtet und eignen sich nicht zur Aushärtung in geheizten Pressen und somit nicht für die Herstellung von beschichteten Holzwerkstoffen und Schichtpreßstoffen.

Die EP-A-4053 betrifft einen Binder für die Herstellung von Dämmstoffen, insbesondere aus Glasfasern. Der Binder besteht aus einer 5 bis 80 gew.%igen Lösung einer Mischung eines wasserlöslichen aminoharzvernetzenden Polyesters und eines wasserlöslichen Melaminharzes im Gewichtsverhältnis 1: (9 bis 0,1). Nähere Hinweise auf den erfindungsgemäß modifizierten Aminoplast konnten der genannten europäischen Patentanmeldung nicht entnommen werden.

Die CH-A-578 934 bezieht sich auf ein Verfahren zur kontinuierlichen Herstellung von Laminatbändern, wobei mindestens zwei kontinuierlich zugeführte Materialbahnen zusammengeführt und danach unter Druck über eine beheizte Drehtrommel geführt werden und wobei die Pressung der Materialbahnen zwischen der Drehtrommel und einem endlosen, mit der Drehtrommel und den Materialbahnen mitlaufenden Preßband durchgeführt wird, wobei die erste der Drehtrommeloberfläche nächstbenachbarte Materialbahn aus einem melaminharzgetränkten Dekorpapier und die daran anschließende Materialbahn aus einer Vulkanfiberfolie

oder einem imprägnierten Karton besteht.

Nach dem Verfahren der CH-A-578 934 wird die erste Materialbahn nacheinenader mit zwei verschiedenen, wasserlöslichen Melaminharz enthaltenden Mitteln imprägniert, wobei im ersten Mittel mindestens 20 Gew.% des Melaminharzes ein verethertes Melaminharz ist und vorzugsweise zusätzlich mindestens 3 Gew.% eines wasserlöslichen Polyesters enthält. Als zweites Mittel wird ein solches ververwendet, das zusätzlich mindestens 3 Gew.% eines mehrwertigen Alkohols enthält. Die CH-A-578 934 enthält keine näheren Angaben über die benutzten Aminoplastharze und über die Zusammensetzung des Polyesters.

Die vorliegende Erfindung betrifft nun einen modifizierten Aminoplast, der die oben genannten, an Tränkharze zur Herstellung von dekorativ beschichteten Holzwerkstoffen und Schichtpreßstoffen gestellten Forderungen in hohem Maß erfüllt und somit eine Kombination technisch wertvoller Eigenschaften aufweist, die ihm, gegenüber bisher bekannten Aminoplasten, erhebliche Vorteile verleiht. Insbesondere ist es unter Verwendung des erfindungsgemäßen Aminoplasten möglich, bei der Oberflächenveredelung von Holzwerkstoffen auch nach dem Kurztaktverfahren rißbeständige, harte Oberflächen mit hervorragenden Glanzeigenschaften, wie sie bisher nur in Mehretagenpressen unter Rückkühlung erzielt werden konnten, herzustellen.

Der erfindungsgemäße modifizierte Aminoplast besteht aus 85 bis 97,5 Gew.% eines zu maximal 10% methylveretherten Aminoplasten, 0 bis 12,5 Gew.-% bekannten Modifizierungsmitteln und 2,5 bis 15 Gew.% eines erfindungsgemäßen Modifizierungsmittels, bestehend aus einem wasserlöslichen Polyester, gegebenenfalls in Mischungen mit freien Di- oder Polyolen in einem solchen Verhältnis, daß, bezogen auf 1 mol gegebenenfalls veresterter Carboxylgruppen, in der Mischung 0,8 bis 4,5 mol gegebenenfalls veresterte alkoholische -OH-Gruppen vorliegen, wobei der im Modifizierungsmittel enthaltene Polyester aufgebaut ist aus den

Resten der folgenden Formeln:

(A) 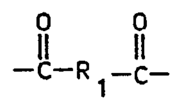

($A_1$) 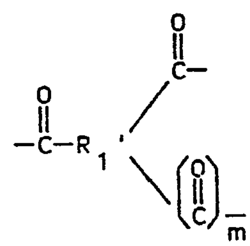

($A_2$) 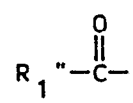

(B) $-O-R_2-O-$

($B_1$ 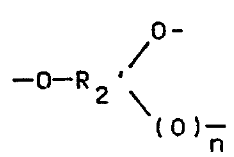

wobei bedeuten:

$R_1$: einen divalenten gesättigten aliphatischen oder cycloaliphatischen oder aromatischen Rest,

m: die Zahl 1 oder 2, vorzugsweise 1,

$R_1'$: einen gesättigten aliphatischen oder cycloaliphatischen oder aromatischen Rest, der bei m = 1 trivalent und bei m = 2 tetravalent ist,

$R_1''$: einen einwertigen gesättigten aliphatischen oder cycloaliphatischen oder aromatischen Rest,

$R_2$: einen divalenten Rest,

n: eine Zahl von 1 bis 6, vorzugsweise 1 oder 2,

$R_2'$: einen gesättigten aliphatischen oder cycloaliphatischen Rest, der bei n = 1 trivalent, bei n = 2 tetravalent und bei n = 3 pentavalent ist und eine Säurezahl von 30 bis 150 aufweist. Der erfindungsgemäße modifizierte Aminoplast ist dadurch gekennzeichnet, daß der für $R_2$ stehende divalente Rest sich im statistischen Mittel aus 40 - 100 mol% der Reste $-CH_2-CH_2-O-CH_2-CH_2-$ und/oder $-CH_2-CH_2-O-CH_2-CH_2-O-CH_2-CH_2-$, 0 - 50 mol%, vorzugsweise 5 - 50 mol%, aliphatischen, cycloaliphatischen oder araliphatischen Resten und gegebenenfalls 0 - 20 mol% Resten der Formel $-CH_2-CH_2-(O-C_2H_4)_p$ mit einem durchschnittlichen Molekulargewicht von 300 - 2000 zusammensetzt, und,

bezogen auf 100 mol% der Reste ($A + A_1 + A_2$), mindestens 40 mol% Reste der Formel

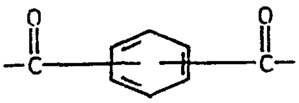

und, bezogen auf 100 mol% der Reste (B + $B_1$), bis zu 50 mol% Reste der Formel $B_1$ sind.

Der erfindungsgemäße modifizierte Aminoplast setzt sich somit zusammen aus einem unmodifizierten oder auch in herkömmlicher Weise durch bekannte Modifizierungsmittel vormodifizierten Aminoplastvorkondensat, welches in den folgenden Ausführungen als Grundharz bezeichnet werden soll, und dem erfindungsgemäß einzusetzenden Modifizierungsmittel. Er enthält 85 bis 97,5 Gew.% Aminoplastvorkondensat, und die Summe der Modifizierungsmittel beträgt maximal 15 Gew.%, bezogen auf die Gesamtmenge von Aminoplastvorkondensat und Modifizierungsmittel. Als Grundharze kommen im Prinzip alle bekannten Aminoplastvorkondensate, sofern sie als Tränkharze verwendet werden konnen, in Betracht. Brauchbar sind grundsätzlich alle wasserlöslichen Aminoplastvorkondensate, deren wäßrige Lösung eine nicht zu hohe Viskosität aufweist und die durch Hitze ausgehärtet werden können. Wie bereits oben beschrieben, stellen derartige Aminoplastharze Kondensationsprodukte aus bekannten Aminoplastbildnern mit Carbonylkomponenten, in der Regel Formaldehyd, dar, die, sofern die Kondensation in Gegenwart von Alkanolen, vorzugsweise Methanol, durchgeführt wurde, auch noch bis zu 10 % anverethert sein können, vorzugsweise jedoch unverethert sind, und die höchstens so weit vorkondensiert worden sind, daß sie noch eine ausreichende Löslichkeit in Wasser besitzen und vor dem endgültigen Auskondensieren durch Hitze eine Schmelzphase durchlaufen. Aminoplastharze, die diese Bedingungen erfüllen, sind in großer Zahl bekannt und werden in weitem Umfang als Tränkharze eingesetzt. Besonders vorteilhaft als Grundharze für die erfindungsgemäßen modifizierten Aminoplaste sind solche mit einem Molverhältnis Aminoplast: Formaldehyd von 1: 1,3 bis 1: 3, vorzugsweise 1: 1,5 bis 1: 2,5. Den bevorzugten Grundharzen zugrundeliegende Aminoplastbildner sind in der Regel Melamin, Harnstoff und Benzoguanamin, insbesondere Melamin und Harnstoff oder Kombinationen aus Melamin und Harnstoff. Die bevorzugten Grundharze stellen somit Melamin- und/oder Harnstoff- und/ oder Benzoguanamin-Formaldehyd-Vorkondensate, insbesondere Melamin- und/oder Harnstoff-Formaldehyd-Vorkondensate, dar.

Für besonders hochwertige erfindungsgemäße Harze werden reine Melamin-Formaldehyd-Vorkondensate als Grundharze bevorzugt, d.h. solche, die ausschließlich auf Melamin als Aminoplastbildner basieren. Die Grundharze können auch vormodifiziert sein, wobei als Vormodifizierungsmittel bekannte Verbindungen, wie beispielsweise Alkanole mit 1 bis 4, vorzugsweise 1 bis 2, C-Atomen, insbesondere Methanol, Ethylenglykol, Ethylendiglykol, Pentaerythrit, Zucker, Sorbit, Carbamate, wie z.B. Methylcarbamat, Methoxyethylcarbamat, Amidosulfosäure und deren Salze, aromatische Sulfonsäureamide, Caprolactam und/ oder Methylen-bis-Formamid in Betracht kommen.

Besonders empfehlenswert sind solche Grundharze, die nur sehr geringfügig oder gar nicht veräthert sind. Sehr vorteilhaft sind auch Grundharze, die, bezogen auf Festkörper, 0,2 bis 1,0 Gew.% eines Amins der Formel I

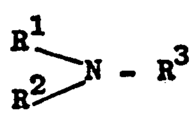

( I )

worin $R^1$ und $R^2$ gleiche oder verschiedene Alkylreste mit 1 bis 4 C-Atomen, vorzugsweise Methyl, und $R^3$ 2-(2-Hydroxyethoxy)-ethyl, 3-Hydroxypropyl-(1), 3-Hydroxypropyl-(2), vorzugsweise 2-Hydroxyethyl oder 2,3-Dihydroxypropyl, oder einen Rest der Formel

$-CH_2CH_2-NR^1R^2$

bedeuten, enthalten.

Das Amin kann bereits während der Kondensation anwesend sein oder es kann dem Vorkondensat nachträglich zugesetzt werden. Demgemäß kann es ganz oder teilweise in Form seiner Reaktionsprodukte mit dem Melamin-Formaldehyd-Kondensationsprodukt vorliegen. Selbstverständlich kann das Amin oder eine Teilmenge des Amins auch gemeinsam mit dem als Modifizierungsmittel zugesetzten Polyester in das erfindungsgemäße modifizierte Aminoplastharz eingebracht werden. Bei der Herstellung der Grundharze wird wie üblich die Kondensation nur so weit geführt, daß die Harze noch löslich und schmelzbar bleiben. Dabei wird in der Regel bis zu einer begrenzten Wasserverdünnbarkeit kondensiert. Die zur Herstellung der erfindungsgemäßen Aminoplaste eingesetzten Grundharze werden in der Regel bis zu einer Wasserverdünnbarkeit von 1: 0,7 bis 1: 4, vorzugsweise 1: 1,0 bis 1: 2,5, kondensiert.

In manchen Fällen, z.B. bei Zusatz von größeren Mengen von Salzen der Amidosulfosäure, können die erhaltenen Harze auch unbegrenzt wasserlöslich sein. Zur Bestimmung der Wasserverdünnbarkeit wird eine

Probe des Harzes mit Wasser bei 20°C titriert. Zum Beispiel besagt die Angabe "Wasserverdünnbarkeit 1: X", daß 1 ml Harz bei 20°C X ml Wasser aufnehmen kann, ohne daß eine Trübung auftritt. Hinweise auf die Durchführung der Kondensation bei der Aminoplastherstellung sind z.B. enthalten in Kirk-Othmer, Encyclopedia of Chemical Technology 1. Auflage, Vol. 1 (1947), 756 - 759; Houben-Weyl "Methoden der organischen Chemie", Band XIV/2 "Makromolekulare Stoffe", Teil 2, (1963); Georg Thieme Verlag Stuttgart, insbesondere Seiten 346 bis 357 (Harnstoffkondensate), Seiten 357 - 371 (Melaminkondensate), Seiten 382 - 3SS (Kondensationsprodukte von Dicyandiamiden und Guanidin); John F. Blais "Amino Resins", Reinhold Publishing Corp,. New York (1959), Seiten 26 - 53, C.P. Vale "Aminoplastics", Cleaver Hume Press Ltd., London (1950), Seiten 12 - 87; Ullmanns Enzyklopädie der technischen Chemie, 4. Auflage, Band 7 (1973), Seiten 403 bis 414.

Zur Herstellung der erfindungsgemäßen modifizierten Aminoplastharze kann das erfindungsgemäß einzusetzende Modifizierungsmittel dem Grundharz-Ansatz vor oder während der Kondensation zugesetzt werden, wie es auch mit anderen bekannten Modifizierungsmitteln gehandhabt wird. Als besonders zweckmäßig und vorteilhaft hat es sich jedoch erwiesen, das erfindungsgemäß einzusetzende Modifizierungsmittel dem Grundharz nach dessen Herstellung in der für den jeweiligen Einsatzzweck optimalen Menge von 2,5 bis 15 Gew.%, bezogen auf Festkörper, zuzumischen.

Das in den erfindungsgemäßen modifizierten Aminoplasten enthaltene erfindungsgemäße Modifizierungsmittel besteht aus einem wasserlöslichen Polyester oder einer Mischung eines wasserlöslichen Polyesters mit den bei seiner Herstellung eingesetzten Diolen und Polyolen. In solchen Mischungen können bis zu 50 Gew.% freie Diole bzw. Polyole enthalten sein. Vorzugsweise enthalten solche Mischungen jedoch nur bis zu 10 Gew.% Diole und Polyole. Die Säurezahlen solcher Mischungen sind aufgrund des Diol- bzw. Polyolgehalts gegenüber der Säurezahl der reinen Polyester erniedrigt und zwar entsprechend dem Anteil des Polyesters in der Mischung. So wird beispielsweise für eine Mischung enthaltend X % eines Polyesters mit der Säurezahl n die Säurezahl m der Mischung

$$m = X \cdot \frac{n}{100} \cdot$$

Die Untergrenze der Säurezahl verschiebt sich daher für Mischungen, die als Modifizierungsmittel in erfindungsgemäßen modifizierten Aminoplasten enthalten sind, auf 15, vorzugsweise 30, entsprechend einem minimalen Polyesteranteil in der Mischung von 50 Gew.%.

Besonders bevorzugt ist der Einsatz von reinen Polyestern oder von solchen mit einem nur geringen Gehalt an freien Diolen oder Polyolen unter 2 Gew.%.

In den erfindungsgemäß als Modifizierungsmittel einzusetzenden Polyestern sind die Reste $R_1$, $R_1'$, $R_1''$, $R_2$ und $R_2'$ nicht auf je eine einzige Bedeutung beschränkt, sondern sie können im Rahmen ihrer Definition mehrere Bedeutungen haben.

Die in den Polyestern enthaltenen Baugruppen (A) sind auf einkondensierte Dicarbonsäuren, die Baugruppen ($A_1$) auf einkondensierte Tri- oder Polycarbonsäuren, die Bausteine ($A_2$) auf einkondensierte Monocarbonsäuren zurückzuführen. Einkondensierte Monocarbonsäuren stellen naturgemäß stets Endgruppen dar und können dazu dienen, besondere Eigenschaften, wie beispielsweise erhöhte Elastizität und Wasserfestigkeit, der ausgehärteten erfindungsgemäßen Aminoplastharze herbeizuführen. Tri- oder Polycarbonsäuren liefern in der Mitte der Polyesterkette freie Carboxylgruppen oder führen zu Verzweigungen der Polyesterkette.

Baugruppen der Formel (B) sind auf einkondensierte Diole, Baugruppen der Formel ($B_1$) auf einkondensierte Tri- oder Polyole zurückzuführen. Baugruppen der Formel ($B_1$) liefern in der Mitte der Polyesterkette freie Hydroxylgruppen oder führen ebenfalls zu Verzweigungen des Polyestermoleküls.

Die Polyester enthalten in der Regel bezogen auf 100 Mol% der Reste ($A + A_1 + A_2$) 80 bis 180, vorzugweise 90 bis 120, Mol% Reste ($B + B_1$) und bezogen auf 100 Mol% der zur Herstellung des Polyesters benutzten Di- und Polycarbonsäuren 15 bis 60, vorzugsweise 25 bis 50, insbesondere 30 - 40, Mol% -COOM-Gruppen, wobei M Wasserstoff oder ein Alkalimetallkation ist.

Der Zusammenhang zwischen Säurezahlen und dem Carboxylgruppen-Anteil im Polyester ist bekannt und hängt auch von den Molgewichten bzw. Äquivalenzgewichten der Polyester-Bausteine ab. Als Faustregel für die erfindungsgemäß einzusetzenden Polyester kann gelten, daß eine Säurezahl von 30 etwa 16 Mol% -COOM-Gruppen, eine Säurezahl von 150 etwa 60 Mol% -COOM-Gruppen, der Säurezahl-Bereich von 60 bis 120 einem Bereich der -COOM-Gruppen von 25 bis 50 Mol% und Säurezahlen um 90 ca. 35 bis 40 Mol% -COOM-Gruppen entsprechen.

Diese Merkmale können in bekannter Weise leicht durch die Wahl des gewünschten Mengenverhältnisses von Säure- und Alkohol-Komponenten bzw. durch Überwachung des Fortschritts der Veresterungsreaktion und Abbruch bei Erreichen der gewünschten Säurezahl herbeigeführt werden.

Selbstverständlich ist es möglich, Polyester erfindungsgemäß als Modifizierungsmittel einzusetzen, die frei sind von Baugruppen der Formeln ($A_1$) und ($A_2$). Im Hinblick auf die gleichmäßigere Verteilung der Carboxylgruppen in der Polyesterkette enthalten die in den erfindungsgemäßen modifizierten Aminoplasten enthaltenen Polyester, bezogen auf 100 Mol% der aus Säurekomponenten stammenden Reste ($A + A_1 + A_2$),

normalerweise bis zu 40, vorzugsweise 20 bis 30, Mol% mehr als zweiwertige Reste ($A_1$) und, bezogen auf 100 Mol% der Reste ($A + A_1 + A_2$), maximal 10 Mol% aus Monocarbonsäuren stammende einwertige Reste ($A_2$).

Es ist auch möglich, Polyester erfindungsgemäß einzusetzen, die keine Baugruppen der Formel ($B_1$) enthalten. Wünscht man jedoch solche verzweigenden Elemente, so enthalten die Polyester in der Regel, bezogen auf 100 mol% der aus Alkoholkomponenten stammenden Reste ($B + B_1$), bis zu 50, vorzugsweise 20 bis 35, mol% der mehr als zweiwertigen Reste ($B_1$).

Die Zusammensetzung der Komponenten ($A + A_1 + A_2$) läßt sich in an sich bekannter Weise durch die Auswahl der Säurekomponenten nach Art und Menge, die der Komponenten ($B + B_1$) durch Auswahl der Alkoholkomponente festlegen.

Es ist besonders vorteilhaft, wenn mehr als zweiwertige Säurereste ($A_1$) solche der Formel

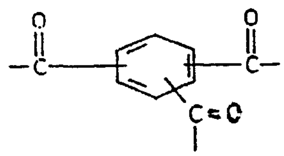

sind, wie sie z.B. durch Einsatz von Trimellithsäure bei der Polyester-Herstellung eingeführt werden.

Ein Anteil von bis zu 20 mol%, vorzugsweise 5 bis 10 mol% der Reste (A) und (B) kann durch einen äquivalenten Anteil von Resten der Formel

$$(C) \qquad -O-R_3-\overset{O}{\overset{\|}{C}}-$$

ersetzt sein, worin $R_3$ ein divalenter, gesättigter, aliphatischer, cycloaliphatischer oder araliphatischer Rest ist.

Bevorzugt sind erfindungsgemäße Polyester, in denen für $R_2$ stehende gesättigte divalente aliphatische Reste 2 bis 10 Kohlenstoffatome, divalente gesättigte cycloaliphatische Reste 6 bis 10 Kohlenstoffatome und divalente araliphatische Reste 8 bis 14 Kohlenstoffatome aufweisen, solche in denen für $R_1$ stehende divalente gesättigte aliphatische Reste 2 bis 8 Kohlenstoffatome, divalente gesättigte cycloaliphathische Reste 6 bis 8 Kohlenstoffatome und divalente aromatische Reste 6 bis 12 Kohlenstoffatome aufweisen und ferner solche, in denen gegebenfalls vorhandene für $R_3$ stehende divalente gesättigte aliphatische Reste 1 bis 10 Kohlenstoffatome, divalente cycloaliphatische Reste 6 bis 11 Kohlenstoffatome, und divalente araliphatische Reste 8 bis 12 Kohlenstoffatome aufweisen.

Bevorzugt sind für $R_1$ und $R_1'$ aliphatische und insbesondere aromatische, für $R_2$ neben den in der Kette Sauerstoff enthaltenden Resten cycloaliphatische und insbesondere aliphatische Reste.

Die Herstellung der erfindungsgemäßen Copolyester kann in an sich bekannter Weise durch Kondensation von Dicarbonsäuren der Formel

$$(A') \qquad HO-\overset{O}{\overset{\|}{C}}-R_1-\overset{O}{\overset{\|}{C}}-OH$$

mit Diolen der Formel

$$(B') \qquad HO-R_2-OH$$

erfolgen, wobei während der Kondensation noch eine mehr als zweibasische Komponente

($A_1'$)

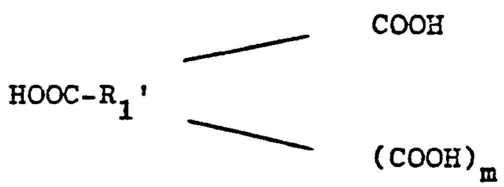

und eine einbasische Säure

(A$_2$') $HOOC-R_1''$

(B$_1$') 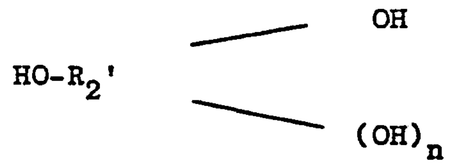

vorhanden sein kann. Die Symbole $R_1$, $R_2$, $R_1'$, $R_1''$, $R_2'$, n und m haben dabei die oben angegebenen Bedeutungen.

Normalerweise wird bei der Herstellung der Polyester nicht nur je eine einzelne Ausgangssubstanz aus den Gruppen (A'), (A$_1$'), (A$_2$'), (B') und (B$_1$') eingesetzt sondern im Rahmen der angegebenen Definition zumindest aus den Gruppen (A') und (B') Mischungen mehrerer Substanzen.

Das Verhältnis von Di- und Polycarbonsäuren (A') und (A$_1$') zu Diol- bzw. Polyolkomponenten (B') und (B$_1$') kann zwischen 100 Mol%: 80 Mol% und 100 Mol%: 450 Mol% variiert werden. Im Falle eines Überschusses von Diolkomponente werden unmittelbar als Modifizierungsmittel geeignete Mischungen von Polyestern und an deren Aufbau beteiligten Diolen und Polyolen erhalten. Vorzugsweise wird so viel Di- und Polycarbonsäure eingesetzt und wird die Kondensation so weit getrieben, daß, bezogen auf die Gesamtmenge der Carbonsäuren (A' + A$_1$' + A$_2$'), 15 bis 60 Mol%, vorzugsweise 25 bis 50 Mol%,-COOM-Gruppen im erhaltenen Polyester vorhanden sind. Will man Polyester mit einem Anteil mehrwertiger Bausteine (A$_1$) bzw. (B$_1$) herstellen, so wird ein Anteil an Tri- und Polycarbonsäuren (A$_1$') von bis zu 40 Mol%, vorzugsweise 20 bis 30 Mol%, und ein Anteil an Tri- und Polyolen (B$_1$') von bis zu 50 Mol%, vorzugsweise 20 bis 35 Mol%, eingesetzt.

Zur Herstellung bevorzugter erfindungsgemäß einzusetzender Copolyester werden Diolkomponenten bzw. -Gemische (B') eingesetzt, bei denen $R_2$ sich im statistischen Mittel aus 40 bis 100 Mol%, insbesondere 60 bis 100 Mol%, der Reste $-CH_2-CH_2-O-CH_2-CH_2-$ und/oder $-CH_2-CH_2-O-CH_2CH_2-O-CH_2CH_2-$, 0 bis 50 Mol% aliphatischen, cycloaliphatischen oder araliphatischen Resten und in speziellen Fällen 0 bis 20 Mol%, insbesondere 0 bis 10 Mol%, Resten der Formel $-CH_2-CH_2-(O-C_2H_4)_p$ - mit einem durchschnittlichen Molekulargewicht von 300 bis 2000 zusammensetzt.

Anstelle der Carbonsäuren können auch deren Anhydride oder Säurehalogenide eingesetzt werden. Bis zu 50 Mol% dieser Säurekomponenten können auch durch die entsprechenden Ester, insbesondere solche mit leicht flüchtigen niederen Alkoholen mit 1 bis 4 Kohlenstoffatomen, ersetzt werden. Bei der Herstellung der Polyester kann ein Anteil von bis zu 20 Mol% vorzugsweise 5 bis 10 Mol%, der Komponenten (A' + B') durch einen äquivalenten Teil einer oder mehrer Hydroxycarbonsäuren der Formel

$$(C') \quad HO-R_3-\overset{\overset{O}{\|}}{C}-OH$$

ersetzt werden. Die Kondensation wird wie üblich bei erhöhter Temperatur von 100 bis 280°C, insbesondere 150 bis 230°C, vorzugsweise unter einer Atmosphäre eines inerten Gases, wie z.B. Stickstoff oder Kohlendioxid, durchgeführt, wobei die flüchtigen Kondensationsprodukte (Wasser und/oder Alkohole) sowie, falls im Endprodukt nicht erwünscht, überschüssige Diolkomponenten abdestilliert werden. Es kann zweckmäßig sein gegen Ende der Kondensation ein Vakuum von z.B. 10 bis 20 mbar oder gegebenenfalls darunter (0,5 mbar) anzulegen, um die flüchtigen Produkte weitgehend zu entfernen.

Bei der Polykondensation können alle zur Anwendung kommenden Komponenten von Anfang an der Polykondensationsreaktion unterworfen werden, also vorgelegt werden. Sie können aber auch in beliebiger Reihenfolge zeitlich abgestuft zugesetzt werden, so daß die zuerst zugesetzten Anteile schon Vorkondensate bilden können. Insbesondere verzweigend wirkende Komponenten setzt man zweckmäßigerweise erst später zu.

Die Polykondensation kann auch in einer oder in mehreren Stufen erfolgen, wobei beispielsweise die Nachsäuerung mittels Di- bzw. Tricarbonsäureanhydrid zum Polyhalbester als getrennte Stufe durchgeführt werden kann. Die Reaktion wird durch Messung der Säurezahl verfolgt. Wasserlösliche, mit dem Aminoplastharz verträgliche Polyesterharze, die in Kombination mit dem Aminoplastharz eine ausreichende Lagerstabilität besitzen, werden insbesondere dann erhalten, wenn die Veresterung bei Säurezahlen zwischen 40 und 150, vorzugsweise 60 und 120, abgebrochen wird.

Die Polykondensation dauert normalerweise 3 bis 15 Stunden und wird so weit durchgeführt, bis das gewünschte Molekulargewicht erreicht ist. Es ist stets sorgfältig darauf zu achten, daß nicht durch eine zu weit geführte Kondensation eine Vernetzung des Copolyesters eintritt, weil sonst die Produkte wasserunlöslich und für den erfindungsgemäßen Zweck ungeeignet werden.

Die Polykondensationsreaktion kann sowohl mit den üblichen Veresterungs- bzw. Umesterungskatalysatoren, wie z.B. Säuren wie Salzsäure, Schwefelsäure, Phosphor- und phosphorige Säure, insbesondere Toluolsulfonsäure, Alkalialkoholaten, Titanalkoholaten, Manganacetat, Zinkacetat, etc. durchgeführt werden, wie auch ganz ohne solche Katalysatoren.

Das Polyesterharz wird abschließend, vorzugsweise mit einem tertiären Amin, auf pH-Werte zwischen 6 und 8 eingestellt und gegebenenfalls mit Wasser oder einem mit Wasser mischbaren Lösungsmittel verdünnt. Geeignete tertiäre Amine sind solche, die neben Alkylgruppen mit 1 bis 4 C-Atomen 0 bis 3 Hydroxyalkylgruppen mit 2 bis 3 C-Atomen enthalten.

Genannt seien neben Trimethyl-, Triethyl-, Tripropyl- und Tributylamin Dimethyl- oder Diethylethanolamin, Methyl- oder Ethyl-diethanolamin sowie Tris-(2'hydroxylpropyl)- oder Tris-(3'hydroxylpropyl)amin und Triethanolamin; besonders geeignet ist Dimethylethanolamin.

Die als Modifizierungsmittel einzusetzenden gemäß obigen Angaben hergestellten Polyester besitzen mittlere Molekulargewichte zwischen 300 und 1500, vorzugsweise zwischen 700 und 1200.

Als Beispiele für gesättigte aliphatische, cycloaliphatische und aromatische Dicarbonsäuren, die zur Herstellung von erfindungsgemäß einzusetzenden Polyestern geeignet sind, seien genannt: Bernsteinsäure, Methylmalonsäure, Glutarsäure, Dimethylmalonsäure, Adipinsäure, Pimelinsäure, Korksäure, 2,2-Dimethylglutarsäure, Azelainsäure, Trimethyladipinsäure, Sebacinsäure, 1,2-Cyclohexan-dicarbonsäure 1,3-Cyclohexan-dicarbonsäure, 1,4-Cyclohexan-dicarbonsäure, Tetrahydrophthalsäure, Endomethylentetrahydrophthalsäure, Norbornandicarbonsäure, Phthalsäure, Isophthalsäure, Terephthalsäure, 1,4-Naphthalin-dicarbonsäure, 2,5-Naphthalin-dicarbon-säure, Diphensäure. Das Kohlenstoffgerüst der in Betracht kommenden Dicarbonsäuren kann auch durch Heteroatome wie Sauerstoff oder Schwefel oder Heterogruppen wie $-SO_2-$ unterbrochen sein. Beispiele hierfür sind Diglykolsäure, Thiodipropionsäure, 4,4'-Oxydibenzoesäure oder 4,4'-Sulfonyldibenzoe-säure. Bevorzugt werden Phthalsäure, Isophthalsäure, Terephthalsäure, Bernsteinsäure, Glutarsäure, Sebacinsäure, Cyclohexandicarbonsäure.

Die genannten Dicarbonsäuren können, wie bereits erwähnt, auch in Form ihrer Ester, Anhydride oder Säurehalogenide, eingesetzt werden. Als Ester kommen solche mit leicht abdestillierbaren Monoalkoholen, also vorzugsweise solche mit 1 bis 4 Kohlenstoffatomen, aber auch Ester mit Diolen oder Polyolen in Betracht.

Beispiele für geeignete, den Rest (B) liefernde Diole (B') sind: Äthylenglykol, Propandieol-1,2 und Propandiol-1,3, Butandiole, insbesondere Butandiol-1,4, Pentandiole, wie Pentandiol-1,5, Hexandiole, insbesondere Hexandiol-1,6, Decandiol-1,10, Diethylenglykol ($HOCH_2CH_2$-O-$CH_2CH_2$ OH), Dipropylenglykol, Triethylenglykol ($HOCH_2CH_2CH_2$-O-$CH_2CH_2$-O-CH $CH_2OH$), Tetraethylenglykol Tripropylenglykol, Polyethylenglykol vom Molekulargewicht 300 - 2000, Bis-(4-hydroxybutyl)-äther, 2-Methylenpro-pandiol-1,3, 2,4-Dimethyl-2-ethylhexan-diol-1,3, 2-Ethyl-2-butyl-propandiol-1,3, 2,2-Dimethyl-propandiol-1,3, 2-Ethyl-2-isobutyl-propandiol-1,3, 2,2,4-Trimethyl-hexandiol-1,6, 1,3-Dihydroxy-cyclohexan, 1,4-Dihydroxy-cyclohexan (Chinit), 1,4-Bis(hydroxymethyl)cyclohexan, 1,3-Bis(hydroxymethyl)-cyclohexan, 1,2-Bis(hydroxymethyl)cyclohexan, 1,4-Bis(hydroxy-methyl)benzol, 1,3-Bis(hydroxymethyl)benzol, 2,6-Bis(hydroxy-methyl)naphthalin.

Bevorzugte Diolkomponenten sind Glykole wie Ethylenglykol, Propylenglykol, Butandiole, Neopentylglykole, Hexandiole und insbesondere Etheralkohole wie Di- und Triethylenglykol.

Beispiele für geeignete den Rest (C) liefernde Hydroxycarbonsäuren (C') sind: Glykolsäure, Milchsäure, 3-Hydroxypropionsäure, 4-Hydroxybuttersäure, 5-Hydroxypentan-3-säure, Mandelsäure 3-Hydroxymethyl-cyclohexan-carbonsäure, 4-Hydroxymethyl-cyclohexan-carbonsäure, 6-Hydroxymethyl-decalin-carbonsäure(-2),

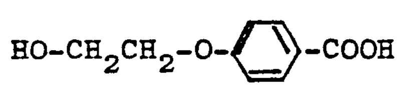

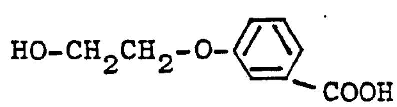

Geeignete Verbindungen ($A_1$'), welche die Gruppe ($A_1$) in das Copolyestermolekül einbauen sind beispielsweise: Trimellitsäure, Trimesinsäure, Hemimellitsäure, Mellophansäure, Prehnitsäure, Pyromellitsäure, Aconitsäure, Tricarballylsäure, Zitronensäure, Apfelsäure, Weinsäure, Ethantetracarbonsäure, 1,2,3-Cyclohexan-tricarbonsäure, 1,2,4-Cyclohexantricarbonsäure, 1,3,5-Cyclo-hexantricarbonsäure, Naphthalintricarbonsäure, Benzophenontetracarbonsäure sowie deren Anhydride und deren Ester, insbesondere Methylester. Bevorzugte Carbonsäuren dieser Gruppe sind Trimellith- und Pyromellithsäure und ihre Derivate.

Geeignete Verbindungen ($B_1$') sind zum Beispiel: Glycerin, Hexantriol, Erythrit, Pentaerythrit, Dipentaerythrit, Trimethylolethan, Trimethylolpropan, Trimethylolhexan, Dimethylolcyclohexan, wobei Pentaerythrit, Trimethylolethan und Trimethylolpropan bevorzugt sind.

Zur Einkondensation in erfindungsgemäß einzusetzende Polyester geeignete Monocarbonsäuren ($A_2$') sind beispielsweise: Ameisensäure, Essigsäure und Propionsäure.

Die Herstellung von dekorativ beschichteten Holzwerkstoffplatten unter Verwendung der erfindungsgemäßen Aminoplaste erfolgt in an sich bekannter Weise so, daß die Papier- bzw. Gewebebahn mit einem erfindungsgemäßen Aminoplasten getränkt und in an sich bekannter Weise weiterverarbeitet wird. Die getränkte und getrocknete Papier- bzw. Gewebebahn wird somit auf die vorbereitete Holzwerkstoffplatte unter Drucken von ca. 10 bis 100 bar bei Temperaturen von ca. 120 bis 180°C aufgepreßt.

Analog können beim Einsatz von mit Phenolharz imprägnierten Trägerbahnen anstelle der Holzwerkstoffplatten Schichtstoffe hergestellt werden, wobei Preßdrucke von ca. 50 bis 150 bar und Temperaturen von ca. 120 bie 180°C zur Anwendung kommen. Hinweise auf die Herstellung beschichteter Holzwerkstoffplatten und von Schichtstoffen finden sich in J.F. Blais loc.cit., Seiten 122 - 138; C.P. Vale, loc. cit., Seiten 209 - 214,und Ullmann, loc.cit., Seiten 417 - 418.

Die unter Verwendung erfindungsgemäßer Aminoplaste hergestellten Schichtstoffe und vorzugsweise die beschichteten Holzwerkstoffe zeigen, auch bei Herstellung nach dem Kurztaktverfahren, einen sehr hohen gleichmäßigen Glanz, einwandfreie Aushärtung und hohe Elastizität und erfüllen auch die übrigen an eine einwandfreie Oberfläche gestellten Forderungen. Die erfindungsgemäßen Aminoplaste sind lagerbeständig, d.h. die hervorragenden, bei der Verarbeitung der Aminoplaste auftretenden Ergebnisse werden während der gesamten Lebenszeit des Harzes erzielt.

Die erfindungsgemäßen Aminoplaste eignen sich insbesondere als Kurztaktharze und sind darüber hinaus auch gegenüber Überhärtungen, wie sie in der Praxis z.B. durch verlängerte Pressenstandzeiten, erhöhte Preßtemperaturen und/oder erhöhte Härtermenge vorkommen können, weitgehend unempfindlich, und sie spalten bei der Verarbeitung nur geringe Mengen von Formaldehyd ab.

Die erreichte hohe Oberflächenelastizität der mit den erfindungsgemäßen Aminoplasten hergestellten Schichtstoffe und beschichteten Holzwerkstoffe ist z.B. dafür verantwortlich, daß bei der Prüfung auf Rißanfälligkeit gemäß DIN 53 799 vom Mai 1975, Ziffer 4.7.1 (Schichtstoffe), bzw. 4.7.3 (beschichtete Holzwerkstoffe), wobei die Proben 20 Stunden lang bei 80 °C gelagert werden, keine Risse auftreten. (Diese Bestimmung der Rißanfälligkeit wird nachstehend Temperung bzw. Temperprüfung genannt). Selbst bei einer Erhöhung der Temperatur auf 100 °C treten in den meisten Fällen noch keine Risse auf.

Sofern nicht anders erwähnt, sind in den Beispielen angegebene Prozente Gewichtsprozente; Temperaturangaben sind in °C gemacht.

**Beispiel 1**

a) In einem 10 l-Rührkolben werden 3250 g 39 gew.%iger wässeriger Formaldehyd, 300 g Methanol, 250 g Wasser und 200 g einer 40 gew.%igen wässerigen Lösung des Natriumsalzes der Amidosulfonsäure, 5 g Dimethylethanolamin und 3100 g Melamin innerhalb vom 30 bis 40 Minuten auf 90°C erhitzt und bei dieser Temperatur bis zu einer Wasserverdünnbarkeit von 1: 2,2 kondensiert (Dauer ca. 4 Stunden). Der pH-Wert der Lösung soll 10,0 ± 0,2 betragen.

b) In einem 5 l-Vierhalsschliffkolben mit Rührer, Thermometer, Gaseinleitungsrohr für Stickstoff und absteigendem Kühler werden 1350 g Triglykol (9 Mol), 1224 g Pentaerythrit (8,8 Mol) und 2664 g Phthalsäureanhydrid (18 Mol) unter Durchleiten eines leichten Stickstoffstroms im Verlauf von ca. 1 Std. auf 180°C erhitzt. Unter ständigem Rühren wird nun im Verlauf von 5 Std. die Temperatur allmählich bis auf 200°C gesteigert, bis eine Säurezahl von 70 erreicht ist, wobei ca. 150 ml Destillat übergehen. Nach dem Abkühlen auf 90°C wird der Kolbeninhalt mit 1800 g Wasser verdünnt und mit 550 g Dimethylethanolamin neutralisiert, wobei 7,4 kg eines 75 %igen wässerigen Polyesterharzes mit einem pH-Wert von 6,6 (gemessen in einer Mischung aus 1 Teil 75 %igem Polyesterharz und 1 Teil 50 %igem wässerigen Ethanol) erhalten werden.

c) Nach dem Abkühlen auf 30°C werden dem im Abschnitt a) dieses Beispiels hergestellten "Grundharz" 10 % des nach Abschnitt b) hergestellten wasserlöslichen Polyesterharzes als Modifizierungsmittel auf Grundharz fest gerechnet zugemischt und durch Wasserzusatz auf einen Festkörperanteil von 56 Gew.% eingestellt.

1.1. Zu dieser Harzlösung wurde 0,9 Gew.% Morpholinsalz der para-Toluolsulfonsäure als Härter (dieser Härter wird auch bei den folgenden Beispielen verwendet), bezogen auf Festharz, zugesetzt. Im der mit Härter versetzten Tränkflotte wurde ein 80 g/m$^2$ schweres weißes Dekorpapier auf ein Endgewicht von ca. 190 g/m$^2$ imprägniert und auf einen Restfeuchtegehalt (VC-Wert) von 5,5 bis 6,5 Gew.% (5 min./160°C) getrocknet. (Die Angabe 5 min/160°C besagt, daß zur Bestimmung des Restfeuchtegehaltes eine Probe 5 Minuten lang bei 160°C gelagert und aus dem dabei erlittenen Gewichtsverlust der Restfeuchtegehalt berechnet wurde).

1.1.1. Ein Teil der Papiere wurde anschließend auf einer Kurztaktpresse mit einem Druck von 18 bis 22 bar bei einer Temperatur von 160°C auf Holzspanplatten aufgepreßt. Die Standzeit der Presse betrug 60 Sekunden. Nach heißer Entformung zeigten die Oberflächen der Beschichtungen einen hervorragenden Hochglanz. Bei guter Aushärtung ergaben sich nach einer Temperung von 20 Stunden bei 140°C im Wärmeschrank mit Luftumwälzung keine Risse, woraus sich klar die ausgezeichnete Elastizitätsreserve des erfindungsgemäßen Tränkharzes ergibt.

1.1.2. Ein Teil der imprägnierten Papiere wurde auf einer Kurztaktpresse mit einem Druck von 18 bis 22 bar bei einer Temperatur von 180°C und einer Standzeit von 2 Minuten auf Holzspanplatten aufgepreßt (Überhärtungs Pressung). Die Oberflächen der Beschichtungen zeigten bei gleichmäßigem Hochglanz und sehr hoher Aushärtung keine Risse.

1.1.3. Ein Teil der imprägnierten Papiere wurde auf einer Mehretagenpresse mit einem Druck von 18 bis 22 bar bei einer Temperatur von 140°C auf Holzspanplatten aufgepreßt. Die Standzeit der Presse betrug 10 Minuten. Danach wurde auf eine Temperatur von 70 bis 80°C zurückgekühlt und entformt. Die Oberflächen der beschichteten Holzspanplatten zeigten bei sehr guter Aushärtung gleichmäßigen Hochglanz und nach einer Temperung von 20 Stunden bei 80°C keine Risse.

1.2. Der Harzlösung des Beispiels 1 wurde 1,2 Gew.% Härter, bezogen auf Festharz, zugesetzt. In der mit Härter versetzten Tränkflotte wurde ein 80 g/$m^2$ schweres Papier wie bei Beispiel 1.1 getränkt und getrocknet. Die imprägnierten Papiere wurden gemäß Beispiel 1.1.2. verpreßt. Die Oberflächen der Papiere zeigten bei gleichmäßigem Hochglanz und sehr hoher Aushärtung keine Risse.

1.3. Die Harzlösung des Beispiels 1 wurde ohne Härterzusatz 21 Tage bei Raumtemperatur (20 bis 25°C) gelagert, danach mit 0,8 Gew.% Härter, bezogen auf Festharz, versetzt. In dieser Lösung wurde gemäß Beispiel 1.1 ein 80 g/$m^2$ schweres, weißes Papier imprägniert und wie in Beispiel 1.1.2. verpreßt. Die Oberflächen der Beschichtungen blieben bei sehr gutem Hochglanz und sehr hoher Aushärtung rißfrei.

**1.4. Vergleichsbeispiel**

In das in Beispiel 1a) hergestellte Grundharz werden 5 Gew.%, bezogen auf Festharz, Methylenbisformamid gemäß D08 21 49 970 eingemischt, und es wird sonst wie in Beispiel 1 verfahren. Zur erhaltenen Harzlösung wurde 0,9 Gew.% Härter, bezogen auf Festharz, zugesetzt. In dieser Tränkflotte wurde ein 80 g schweres Papier gemäß Beispiel 1.1. imprägniert, getrocknet und gemäß Beispiel 1.1.2 verpreßt. Die Oberflächen der Beschichtungen zeigten bei sehr hoher Aushärtung keine Risse und einen gleichmäßigen Glanz, der jedoch deutlich unter dem Glanzgrad der nach Beispiel 1.1.2 hergestellten Oberflächen lag. Die Harzlösung wurde ohne Härterzusatz 14 Tage bei Raumtemperatur gelagert und wie oben verarbeitet. Die Oberflächen der Beschichtungen zeigten einzelne Risse über der ganzen Fläche.

**1.5 Vergleichsbeispiel**

Die Herstellung der Harzlösung gemäß Beispiel 1 wurde mit der Abänderung wiederholt, daß das erfindungsgemäße Modifizierungsprodukt weggelassen wurde. Unter Verwendung der so hergestellten Aminoharzlösung wurden wie in Beispiel 1.1.2 Holzspanplatten beschichtet. Die Oberflächen der beschichteten Spanplatten zeigen Rißbildungen über die ganze Fläche und deutliche Glanzstörungen.

**Beispiel 2**

a) Gemäß den Angaben in Beispiel 1a) wurde ein Grundharz hergestellt.

b) In einem 5 l-Kolben, ausgestattet wie in Beispiel 1b) werden 1908 g Diglykol, 1705 g Phthalsäureanhydrid und 830 g Trimellithsäureanhydrid unter Durchleiten eines leichten Stickstoffstroms auf 180°C erhitzt und ca. 5 Stunden bei dieser Temperatur gerührt, bis eine Säurezahl von 90 erreicht ist, wobei ca. 210 ml Destillat übergehen. Nach dem Abkühlen auf 90°C wird der Kolbeninhalt mit 540 g Wasser und 590 g Dimethylethanolamin versetzt, wobei 5,3 kg eines 75 %igen wässerigen Polyesterharzes mit einem pH-Wert von 6,6 (gemessen in einer Mischung aus 1 Teil 75 %igem Polyesterharz und 1 Teil 50 %igem wässerigen Ethanol) erhalten werden.

c) In das Grundharz gemäß Abschnitt a), werden 8 % des Modifizierungsmittels nach Abschnitt b) eingemischt (vorliegend auf festes Grundharz gerechnet). Alle sonstigen Reaktionsbedingungen werden konstant gehalten.

2.1 Der so hergestellten Harzlösung wurde 0,9 % Härter zugesetzt. Die Weiterverarbeitung erfolgte wie unter Beispiel 1.1.2. beschrieben. Die Oberflächen der so beschichteten Spanplatten zeigten einwandfreien Hochglanz und blieben im Restfeuchtebereich von 6 bis 7 Gew.% rißfrei.

2.2 Der Harzlösung wurde 0,4 % Härter zugesetzt. Die Weiterverarbeitung erfolgte gemäß Beispiel 1.1.3. Auch die so hergestellten dekorativ beschichteten Holzspanplatten zeigten bei sehr gutem Hochglanz und guter Aushärtung nach Temperung bei 20 Stunden bei 80°C keine Risse.

**Beispiel 3**

In das Grundharz gemäß Beispiel 1a) werden 145 g des in Beispiel 1b) beschriebenen Modifizierungsmittels (ca. 5 Gew.% vorliegend auf fest gerechnet) und 70 g Diethylenglykol eingemischt. Alle sonstigen Bedingungen des Beispiels 1 bleiben konstant.

Dieser Harzlösung wurde 0,4 % Härter, bezogen auf Festharz, zugesetzt. Die Weiterverarbeitung erfolgte wie in Beispiel 1.1.3. Die Oberflächen der so beschichteten Holzspanplatten zeigen bei guter Aushärtung hervorragenden Hochglanz und bleiben auch nach einer Temperung von 20 Stunden bei 80° C rißfrei.

**Beispiel 4**

380 g wässerige 39 gew.%ige Formaldehydlösung, 10 g Ethylenglykol, 20 g Methanol, 10 g Zucker und 6 g einer 40 gew.%igen Lösung des Natriumsalzes der Amidosulfonsäure werden durch Zusatz von 27%iger Natronlauge auf einen pH-Wert von 10,1 gestellt und es werden unter Rühren 330 g Melamin zugegeben. Dieses Gemisch wird auf 90°C erhitzt und bis zu einer Wasserverdünnbarkeit von 1: 1,5 kondensiert. Nach Abkühlen auf 50°C werden 40 g des Modifizierungsproduktes gemäß Beispiel 1b) und 150 g Wasser zugegeben. Der Gehalt der Harzlösung an Modifizierungsmittel gemäß Beispiel 1b) beträgt 5,3 Gew.%, bezogen auf Festharz. Diese Harzlösung wird mit 0,4 % Härter, bezogen auf Festharz, versetzt. In dieser Lösung wird ein 80 g/m² schweres Dekorpapier wie unter 1.1. imprägniert und gemäß 1.1.3. auf Holzspanplatten aufgepreßt. Die Oberflächen der so beschichteten Spanplatten zeigen bei guter Aushärtung gleichmäßigen Hochglanz und bleiben nach 20stündiger Temperung bei 80° C rißfrei.

**Beispiel 5**

36,0 kg wässrige 39 gew.%ige Formaldehydlösung, 2,7 kg Diethylenglykol, 1,0 kg Methanol, 2,2 kg Natriumsalz der Amidosulfonsäure, 3,7 kg Zucker und 15,0 kg Wasser werden auf einen pH-Wert von 10,1 mit Dimethylaminoethanol gestellt und es werden 32 kg Melamin zugegeben. Dieses Gemisch wird bei 90°C auf eine Wasserverdünnbarkeit von 1: 2,0 kondensiert, auf 30°C abgekühlt und 5 kg Wasser zugefügt. Anschließend erfolgt die Zugabe von 7,5 % Modifizierungsmittel gemäß Beispiel 1b) (vorliegend auf Festharz bezogen).

5.1. Dieser Harzlösung wurden 0,9 Gew.% Härter, bezogen auf Festharz, zugesetzt. In der so erhaltenen Harzlösung wird ein 80 g/m² schweres Papier gemäß 1.1.imprägniert und mit dem imprägnierten Papier werden Holzspanplatten wie in 1.1.2. beschichtet.

Die Oberflächen der beschichteten Platten bleiben bei sehr hohem Glanz und guter Aushärtung rißfrei.

5.2. Die Harzlösung von Beispiel 5 wurde mit 0,4 Gew.% Härter, bezogen auf Festharz, versetzt und gemäß Beispiel 1.1.3. weiterverarbeitet.

Die Oberflächen der so beschichteten Holzspanplatten zeigen bei guter Aushärtung gleichmäßigen Hochglanz und bleiben nach 20stündiger Temperung bei 80° C rißfrei.

**Beispiel 6**

552 g 39 gew.%iger wäßriger Formaldehyd, 540 g Melamin, 140 g Wasser, 30 g Diethylenglycol, 7 g Methanol, 15 g Caprolactam, 20 g 40 gew.%ige wäßrige Na-Aminosulfonat-Lösung, 3 g Dimethylethanolamin werden innerhalb von 30 bis 40 Minuten auf 90°C erhitzt. Dann wird bei dieser Temperatur bis zu einer Wasserverdünnbarkeit von 1: 1,5 kondensiert (Dauer ca. 4 Stunden). Der pH-Wert der Lösung soll 10,0 + 0,2 betragen. Nach dem Abkühlen auf 30° C kann das so erhaltene Grundharz mit den gemäß den Beispielen 1b), 2b oder 7 hergestellten Polyestern oder einem Polyester der Tabelle 1 zu einem erfindungsgemäßen modifizierten Aminoplastharz gemischt werden, das ebenfalls hochglänzende, selbst bei starker Aushärtung sehr elastische Oberflächen liefert, bei der Verarbeitung wenig Formaldehyd abspaltet und sehr gut lagerfähig ist.

Zu ähnlich guten Ergebnissen gelangt man, wenn man analog der obigen Vorschrift 552 g 39 gew.%igen wäßrigen Formaldehyd, 560 g Melamin, 170g Wasser, 30 g Diethylenglycol, 7 g Methanol, 15 g Caprolactam, 20 g 40 gew.%ige wäßrige Na-Aminosulfonat-Lösung, 3 g Dimethylethanolamin auf eine Wasserverdünnbarkeit von 1: 1,5 kondensiert oder 780g 39 gew.%igen wäßrigen Formaldehyd, 850 g Melamin, 200 g Wasser, 60 g Diethylenglycol, 20 g Caprolactam, 10 g 40 gew.%ige wäßrige Na-Aminosulfonat-Lösung, 3 g Dimethylethanolamin, auf eine Wasserverdünnbarkeit von 1: 1,0 kondensiert und die so erhaltenen Produkte als Grundharze einsetzt.

**Beispiel 7**

In einem 2 l-Vierhalsschliffkolben mit Rührer, Thermometer, Gaseinleitungsrohr für Stickstoff und absteigendem Kühler werden 350 g Diethylenglycol (= 3,3 Mol), 186,8 g Isophthalsäure 99 %ig (= 1,125 Mol)

und 227,25 g Sebazinsäure (5,125 Mol) im Laufe einer Stunde unter Stickstoff auf 190°C geheizt, im Laufe einer zweiten Stunde bis 200° und dann noch 1 Stunde bei 200 - 205°C gehalten. Man erhält eine klare Lösung, und insgesamt etwa 62 g Wasser werden in der Vorlage aufgefangen. Die Schmelze kühlt man dann wieder bis 170°C ab, rührt 144 g Zitronensäure (= 0,75 Mol) ein und hitzt nochmals solange auf 200°C, bis die Säurezahl 88 trägt (was etwa 1 Stunde dauert). Dabei destillieren nochmals ca. 35 g Wasser ab, und man erhält den verzweigten Polyester in Form von 790 g einer hellen Schmelze als Rückstand. Sein mittleres Molekulargewicht liegt bei 1010. Er wird mit 240 g destilliertem Wasser verdünnt und mit 99 g Dimethylethanolamin bis pH-7 neutralisiert. Ausbeute = 1129 g klare, helle, viskose 70%ige Lösung. Der so erhaltene Polyester liefert, mit den in den vorangehenden Beispielen beschriebenen Grundharzen kombiniert, erfindungsgemäße modifizierte Harze mit sehr guter Haltbarkeit und geringer Formaldehydabspaltung bei der Verarbeitung, die Überzüge von hervorragendem Hochglanz und sehr großer Elastizitätsreserve auch bei hoher Aushärtung sowohl in Mehretagenpressen als auch im Kurztaktverfahren herzustellen gestatten.

Ähnlich gute Ergebnisse werden bei Einsatz der in der folgenden Tabelle aufgeführten Polyester als erfindungsgemäße Modifizierungsmittel erhalten.

Der in der Spalte "Glanzzunahme" angegebene Wert bezieht sich auf den Vergleich des betreffenden erfindungsgemäßen Harzes mit einem handelsüblichen, mit Caprolactam/Diethylenglycol modifizierten Melaminharz.

**Tabelle**

Plyester als erfindungsgeäße Modifizierungsmittel

| Nr. | Dicarbonsäure-Komponenten | Mol % | Diol-Komponenten | Mol % | Säure-zahl | mitt- zunah- Mol- | Glanz- prüfung me [%] | Riß- test 140°C | Kiton- |
|---|---|---|---|---|---|---|---|---|---|
| 1 | Isophthalsäure<br>Sebazinsäure<br>Trimellitsäureanhydrid | 37,5<br>37,5<br>25 | Diethylenglycol | 110 | 96 | 1270 | 27 % | einwand-<br>frei | 2 |
| 2 | Isophthalsäure<br>Phthalsäureanhydrid<br>Pyromellithsäureanhydrid | 40<br>40<br>20 | Diethylenglycol | 110 | 116 | 770 | 18 % | einwand-<br>frei | 2—3 |
| 3 | Isophthalsäure<br>Phthalsäureanhydrid<br>Trimellitsäureanhydrid | 40<br>40<br>20 | Diethylenglycol | 110 | 89 | 780 | 21 % | einwand-<br>frei | 2—3 |
| 4 | Dimethylterephthalat<br>Cyclohexandicarbonsäure-<br>dimethylester<br>Trimellitsäureanhydrid | 37,5<br>37,5<br><br>25 | Diethylenglycol | 110 | 74 | 800 | 23 % | einwand-<br>frei | 2 |
| 5 | Phthalsäureanhydrid<br>Trimellitsäureanhydrid | 72,7<br>27,3 | Diethylenglycol<br>Ethylenglycol | 70<br>30 | 91,9 | 890 | 24 % | einwand-<br>frei | 3 |
| 6 | Isophthalsäure<br>Sebacinsäure<br>Zitronensäure | 37,5<br>37,5<br>25 | Diethylenglycol | 110 | 88 | 1010 | 29 % | einwand-<br>frei | 2—3 |
| 7 | Isophthalsäure<br>Sebacinsäure<br>Zitronensäure | 40<br>40<br>20 | Diethylenglycol<br>Hexandiol-(1,6) | 95<br>15 | 90 | 1000 | 22 % | einwand-<br>frei | 2—3 |
| 8 | Isophthalsäure<br>Trimellitsäureanhydrid | 72,7<br>27,3 | Diethylenglycol | 100 | 89,9 | 1030 | 18 % | einwand-<br>frei | 3 |
| 9 | Phthalsäureanhydrid<br>Trimellitsäureanhydrid | 72,7<br>27,3 | Diethylenglycol<br>Hexandiol-(1,6) | 70<br>30 | 91,9 | 870 | 18 % | einwand-<br>frei | 3 |

| Nr. | Dicarbonsäure-Komponenten | Mol % | Diol-Komponenten | Mol % | Säure-zahl | mitt-<br>zunah-<br>Mol- | Glanz-<br>prüfung<br>me<br>[%] | Riß-<br>test<br>140° C | Kiton- |
|---|---|---|---|---|---|---|---|---|---|
| 10 | Phthalsäureanhydrid<br>Bernsteinsäureanhydrid | 50<br>50 | Diethylenglycol<br>Trimethylolpro-<br>pan | 80<br>40 | 80 | 950 | 25 % | einwand-<br>frei | 2 |
| 11 | Isophthalsäure<br>Trimellitsäureanhydrid | 75<br>25 | Diethylenglycol<br>Glycerin | 75<br>25 | 127 | 900 | 33 % | einwand-<br>frei | 2 |
| 12 | Isophthalsäure<br>Terephthalsäure | 90<br>10 | Diethylenglycol<br>Trimethylolethan | 80<br>40 | 55 | 710 | 28 % | einwand-<br>frei | 2 |
| 13 | Isophthalsäure<br>Trimellitsäureanhydrid | 75<br>25 | Diethylenglycol | 110 | 105 | 870 | 26 % | einwand-<br>frei | 2—3 |
| 14 | Phthalsäureanhydrid<br>Trimellitsäureanhydrid | 72,7<br>27,3 | Diethylenglycol<br>Bis-hydroxyme-<br>thylcyclohexan | 70<br>30 | 93,7 | 840 | 10 % | einwand-<br>frei | 3 |
| 15 | Phthalsäureanhydrid | 100 | Diethylenglycol<br>Dipentaerythrit | 60<br>30 | 75 | 800 | 24 % | einwand-<br>frei | 2—3 |
| 16 | Isophthalsäure<br>Sebacinsäure<br>Trimellitsäureanhydrid | 37,5<br>37,5<br>25 | Diethylenglycol<br>Triethylenglycol<br>Ethylenglycol | 40<br>40<br>30 | 90 | 1050 | 22 % | einwand-<br>frei | 2—3 |
| 17 | Isophthalsäure<br>Trimellitsäureanhydrid<br>Milchsäure | 70<br>25<br>5 | Diethylenglycol | 105 | 102 | 850 | 20 % | einwand-<br>frei | 2—3 |
| 18 | Isophthalsäure<br>Sebacinsäure<br>Trimellitsäureanhydrid<br>p-(ß-Hydroxyethoxy) ben-<br>zoesäure | 35<br>25<br>20 | Ethylenglycol<br>Diethylenglycol<br>Triethylenglycol | 10<br>50<br>40 | 75 | 950 | 23 % | einwand-<br>frei | 2—3 |

**Patentansprüche**

für die Vertragsstaaten: BE, DE, FR, GB, IT, NL, SE.

1. Modifizierter Aminoplast, bestehend aus 85 bis 97,5 Gew.% eines zu maximal 10% methylveretherten Aminoplasten,

0 bis 12,5 Gew.-% bekannten Modifizierungsmitteln und 2,5 bis 15 Gew.% eines erfindungsgemäßen Modifizierungsmittels, bestehend aus einem wasserlöslichen Polyester,

gegebenenfalls in Mischungen mit freien Di-oder Polyolen in einem solchen Verhältnis, daß, bezogen auf 1 mol gegebenenfalls veresterter Carboxylgruppen, in der Mischung 0,8 bis 4,5 mol gegebenenfalls veresterte alkoholische -OH-Gruppen vorliegen,

wobei der im Modifizierungsmittel enthaltene Polyester aufgebaut ist aus den Resten der folgenden Formeln:

(A) 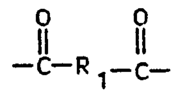

($A_1$) 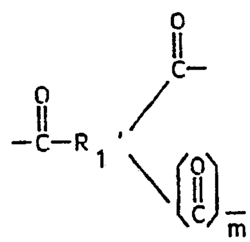

($A_2$) 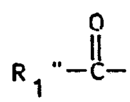

(B) $-O-R_2-O-$

($B_1$) 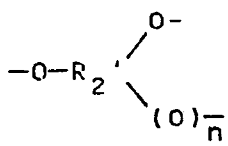

wobei bedeuten:

**$R_1$: einen divalenten gesättigten aliphatischen oder cycloaliphatischen oder aromatischen Rest,**

**m: die Zahl 1 oder 2, vorzugsweise 1,**

**$R_1'$: einen gesättigten aliphatischen oder cycloaliphatischen oder aromatischen Rest, der bei m = 1 trivalent und bei m = 2 tetravalent ist,**

**$R_1''$: einen einwertigen gesättigten aliphatischen oder cycloaliphatischen oder aromatischen Rest,**

**$R_2$: einen divalenten Rest,**

**n: eine Zahl von 1 bis 6, vorzugsweise 1 oder 2,**

**$R_2'$: einen gesättigten aliphatischen oder cycloaliphatischen Rest, der bei n = 1 trivalent, bei n = 2 tetravalent und bei n = 3 pentavalent ist und eine Säurezahl von 30 bis 150 aufweist,**

**dadurch gekennzeichnet, daß**

**der für $R_2$ stehende divalente Rest sich im statistischen Mittel aus 40 - 100 mol% der Reste $-CH_2-CH_2-O-CH_2-CH_2-$und/oder $-CH_2-CH_2-O-CH_2-CH_2-O-CH_2-CH_2-$, 0-50 mol%, vorzugsweise 5 - 50 mol%, aliphatischen, cycloaliphatischen oder araliphatischen Resten und gegebenenfalls 0 -20 mol% Resten der Formel $-CH_2-CH_2-(O-C_2H_4)_p$ mit einem durchschnittlichen Molekulargewicht von 300 - 2000 zusammensetzt, und,**

**bezogen auf 100 mol% der Reste ($A + A_1 + A_2$), mindestens 40 mol% Reste der Formel**

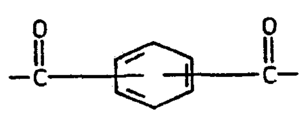

**und, bezogen auf 100 mol% der Reste ($B + B_1$), bis zu 50 mol% Reste der Formel $B_1$ sind.**

2. Modifizierter Aminoplast gemäß Anspruch 1, dadurch gekennzeichnet, daß der Aminoplast ein Melamin- und/oder Harnstoff-Formaldehyd-Vorkondensat ist.

3. Modifizierter Aminoplast gemäß den Ansprüchen 1 und 2, dadurch gekennzeichnet, daß das Molverhältnis Aminoplastbildner: Formaldehyd 1: 1,3 bis 1: 3 beträgt.

4. Modifizierter Aminoplast gemäß den Ansprüchen 1 bis 3, dadurch gekennzeichnet, daß der im Modifizierungsmittel enthaltene Polyester, bezogen auf 100 mol% der Reste ($A + A_1 + A_2$), 80 bis 180 mol% Reste ($B + B_1$) enthält.

5. Modifizierter Aminoplast gemäß den Ansprüchen 1 bis 4, dadurch gekennzeichnet, daß der im Modifizierungsmittel enthaltene Polyester, bezogen auf 100 mol% der Reste ($A + A_1 + A_2$), bis zu 40 mol% Reste ($A_1$) enthält.

6. Modifizierter Aminoplast gemäß den Ansprüchen 1 bis 5, dadurch gekennzeichnet, daß der im Modifizierungsmittel enthaltene Polyester, bezogen auf 100 mol% der Reste ($B + B_1$), bis zu 50 mol% der Reste ($B_1$) enthält.

7. Modifizierter Aminoplast gemäß den Ansprüchen 1 bis 6, dadurch gekennzeichnet, daß der im Modifizierungsmittel enthaltene Polyester, bezogen auf 100 mol% der Reste ($B + B_1$), mindestens 40 mol% Reste der Formel $-O-CH_2-CH_2-O-CH_2-CH_2-O-$ und/oder $-O-CH_2-CH_2-O-CH_2-CH_2-O-CH_2-CH_2-O-$ enthält.

8. Verfahren zur Herstellung eines modifizierten Aminoplasten, dadurch gekennzeichnet, daß man zur Herstellung von 100 Gewichtsteilen des Produkts 85 bis 97,5 Gew.-Teile eines zu maximal 10 % methylveretherten Aminoplasten vor, während oder nach der Kondensation 0 bis 12,5 Gew.-Teile bekannter Modifizierungemittel und 2,5 bis 15 Gew.Teile des in Anspruch 1 definierten Nodifizierungsmittels zumischt.

9. Verwendung des modifizierten Aminoplastharzes der Ansprüche 1 bis 8 zur Herstellung von beschichteten Holzwerkstoffen und Schichtpreßstoffen.

**Patentansprüche**

für den Vertragsstaat: Österreich

1. Verfahren zur Herstellung eines modifizierten Aminoplasten, bestehend aus 85 bis 97,5 Gew.% eines zu maximal 10% methylveretherten Aminoplasten, 0 bis,12,5 Gew.-% bekannten Modifizierungsmitteln und 2,5 bis 15 Gew.% eines Modifizierungsmittels, bestehend aus einem wasserlöslichen Polyester,

gegebenenfalls in Mischungen mit freien Di- oder Polyolen in einem solchen Verhältnis, daß, bezogen auf 1 mol gegebenenfalls veresterter Carboxylgruppen, in der Mischung 0,8 bis 4,5 mol gegebenenfalls veresterte alkoholische -OH-Gruppen vorliegen,

wobei der im Modifizierungsmittel enthaltene Polyester aufgebaut ist aus den Resten der folgenden Formeln:

(A) 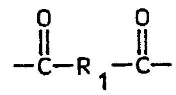

($A_1$) 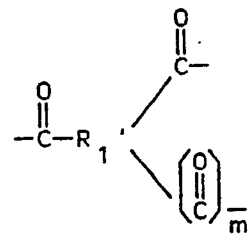

($A_2$) 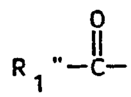

(B) $-O-R_2-O-$

($B_1$) 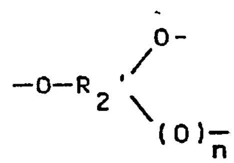

wobei bedeuten:

$R_1$: einen divalenten gesättigten aliphatischen oder cycloaliphatischen oder aromatischen Rest,

m: die Zahl 1 oder 2, vorzugsweise 1,

$R_1'$: einen gesättigten aliphatischen oder cycloaliphatischen oder aromatischen Rest, der bei m = 1 trivalent und bei m = 2 tetravalent ist,

$R_1''$: einen einwertigen gesättigten aliphatischen oder cycloaliphatischen oder aromatischen Rest,

$R_2$: einen divalenten Rest,

n: eine Zahl von 1 bis 6, vorzugsweise 1 oder 2,

$R_2'$: einen gesättigten aliphatischen oder cycloaliphatischen Rest, der bei n = 1 trivalent, bei n = 2 tetravalent und bei n = 3 pentavalent ist und eine Säurezahl von 30 bis 150 aufweist, dadurch gekennzeichnet, daß man zur Herstellung von 100 Gewichtsteilen des Produkts 85 bis 97,5 Gewichtsteile eines zu maximal 10 % methylveretherten Aminoplasten vor, während oder nach der Kondensation 0 bis 20 Gewichtsteile bekannter Modifizierungsmittel und 2,5 bis 15 Gewichtsteile eines solchen Polyesters als Modifizierungsmittels zumischt, daß

der für $R_2$ stehende divalente Rest sich im statistischen Mittel aus 40 - 100 mol% der Reste $-CH_2-CH_2-O-CH_2-CH_2-$ und/oder $-CH_2-CH_2-O-CH_2-CH_2-O-CH_2-CH_2-$, 0 - 50 mol%, vorzugsweise 5 - 50 mol%, aliphatischen, cycloaliphatischen oder araliphatischen Resten und gegebenenfalls 0 -20 mol% Resten der Formel $-CH_2-CH_2-(O-C_2H_4)_p$ mit einem durchschnittlichen Molekulargewicht von 300 - 2000 zusammensetzt, und,

bezogen auf 100 mol% der Reste ($A + A_1 + A_2$), mindestens 40 mol% Reste der Formel

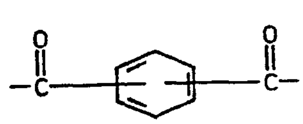

und, bezogen auf 100 mol% der Reste ($B + B_1$), bis zu 50 mol% Reste der Formel $B_1$ sind.

2. Verfahren gemäß Anspruch 1, dadurch gekennzeichnet, daß als Aminoplast ein Melamin- und/oder Harnstoff-Formaldehyd-Vorkondensat verwendet wird.

3. Verfahren gemäß den Ansprüchen 1 und 2, dadurch gekennzeichnet, daß bei der Kondensation ein Molverhältnis Aminoplastbildner: Formaldehyd 1: 1,3 bis 1: 3 eingehalten wird.

4. Verfahren gemäß den Ansprüchen 1 bis 3, dadurch gekennzeichnet, daß als Modifizierungsmittel ein Polyester verwendet wird, der, bezogen auf 100 mol% der Reste ($A + A_1 + A_2$), 80 bis 180 mol% Reste ($B + B_1$) enthält.

5. Verfahren gemäß den Ansprüchen 1 bis 4, dadurch gekennzeichnet, daß als Modifizierungsmittel ein Polyester verwendet wird, der, bezogen auf 100 mol% der Reste ($A + A_1 + A_2$), bis zu 40 mol% Reste ($A_1$) enthält.

6. Verfahren gemäß den Ansprüchen 1 bis 5, dadurch gekennzeichnet, daß als Modifizierungsmittel ein Polyester verwendet wird, der, bezogen auf 100 mol% der Reste ($B + B_1$), bis zu 50 mol% der Reste ($B_1$) enthält.

7. Verfahren gemäß den Ansprüchen 1 bis 6, dadurch gekennzeichnet, daß als Modifizierungsmittel ein Polyester verwendet wird, der, bezogen auf 100 mol% der Reste ($B + B_1$), mindestens 40 mol% Reste der Formel $-O-CH_2-CH_2-O-CH_2-CH_2-O-$ und/oder $-O-CH_2-CH_2-O-CH_2-CH_2-O-CH_2-CH_2-O-$ enthält.

8. Verwendung des nach einem oder mehreren der Ansprüche 1 bis 7 hergestellten modifizierten Aminoplasten zur Herstellung von beschichteten Holzwerkstoffen und Schichtpreßstoffen.

## Claims

for the Contracting States: DE, BE, FR, GB, IT, NL, SE.

1. Modified aminoplast consisting of 85 to 97,5 % by weight of an aminoplast wnich has been etherified witn methyl to an extent not exceeding 10 %, 0 to 12,5 % by weight of known modifying agents and 2,5 to 15 % by weight of a modifying agent according to the invention consisting of a water-soluble polyester, if appropriate, in mixtures with free diols or polyols in a ratio such that, relative to 1 mol of optionally esterified carboxyl groups, 0.8 to 6.5 mols of optionally esterified alcoholic -OH groups are present in the mixture, the polyester present in the modifying agent having been synthesised from radicals of the following formulae:

(A) 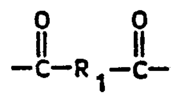

($A_1$) 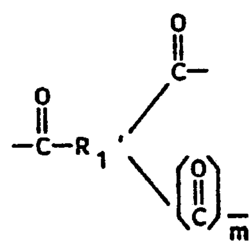

($A_2$) 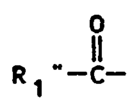

(B) $-O-R_2-O-$

($B_1$ 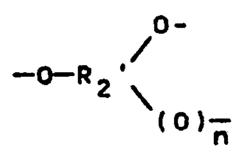

wherein $R_1$ denotes a divalent, saturated aliphatic or cycloaliphatic or aromatic radical,

m denotes the number 1 or 2, preferably 1,

$R_1'$ denotes a saturated aliphatic or cycloaliphatic or aromatic radical which is trivalent if $m = 1$ and is tetravalent if $m = 2$,

$R_1''$ denotes a monovalent saturated aliphatic or cycloaliphatic or aromatic radical,

$R_2$ denotes a divalent radical,

n denotes a number from 1 to 6, preferably 1 or 2,

$R_2'$ denotes a saturated aliphatic or cycloaliphatic radical which is trivalent if $n = 1$, is tetravalent if $n = 2$ and is pentavalent if $n = 3$, and the polyester has an acid number of 30 to 150,

characterised in that the divalent radical representing $R_2$ is composed, as a statistical average, of 40 - 100 mol % of the radicals $-CH_2-CH_2-O-CH_2-CH_2-$ and/or $-CH_2-CH_2-O-CH_2-CH_2-O-CH_2-CH_2-$, 0 - 50 mol %, prefably 5 - 50 Mol %, of aliphatic, cycloaliphatic or araliphatic radicals and, if appropriate, 0 - 20 mol % of radicals of the

formula $-CH_2-CH_2-(O-C_2H_4)_p-$ having an average molecular weight of 300 - 2000 and in that, relative to 100 mol % of the radicals ($A + A_1 + A_2$), at least 40 mol % are radicals of the formula

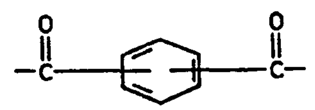

and, relative to 100 mol % of the radicals ($B + B_1$), up to 50 mol % are radicals of the formula $B_1$.

2. Modified aminoplast according to Claim 1, characterised in that the aminoplast is a melamineformaldehyde and/or urea-formaledhyde precondensate.

3. Modified aminoplast according to Claims 1 and 2, characterised in that the aminoplast precursor formaldehyde molar ratio is 1: 1.3 to 1: 3.

4. Modified aminoplast according to Claims 1 to 3, characterised in that the polyester present in the modifying agent contains, relative to 100 mol % of the radicala ($A + A_1 + A_2$), 80 to 180 mol % of radicals ($B + B_1$).

5. Modified aminoplast according to Claims 1 to 4, characterised in that the polyester present in the modifying agent contains, relative to 100 mol % of the radicals ($A + A_1 + A_2$), up to 40 mol % of radicals ($A_1$).

6. Modified aminoplast according to Claims 1 to 5, characterised in that the polyester present in the radicals ($B + B_1$), up to 50 mol % of the radicals ($B_1$).

7. Modified aminoplast according to Claims 1 to 6, characterised in that the polyester present in the modifying agent contains, relative to 100 mol % of the radicals ($B + B_1$), at least 40 mol % of radicals of the formula $-O-CH_2-CH_2-O-CH_2-CH_2-O-$ and/or $-O-CH_2-CH_2-O-CH_2-CH_2-O-CH_2-CH_2-O-$.

8. Process for the preparation of a modified aminoplast, characterised in that, in order to prepare 100 parts by weight of the product, 0 to 12.5 parts by weight of known modifying agents and 2.5 to 15 parts by weight of the modifying agent defined in claim 1 are mixed, before, during or after the condensation reaction, into 85 to 97,5 parts by weight of an aminoplast which has been etherified with methyl to an extent not exceeding 10 %.

9. Use of the modified aminoplast resin of Claims 1 to 8 for the production of coated wood-based materials and laminated plastics.

## Claims

for the Contracting State: AT

1. Process for preparing a modified aminoplast consisting of 85 to 97,5 % by weight of an aminoplast which has been etherified with methyl to an extent not exceeding 10 %, 0 to 12,5 % by weight of known modifying agents and 2,5 to 15 % by weight of a modifying agent according to the invention consisting of a water-soluble polyester, if appropriate, in mixtures with free diols or polyols in a ratio such that, relative to 1 mol of optionally esterified carboxyl groups, 0.8 to 4.5 mols of optionally esterified alcoholic -OH groups are present in the mixture, the polyester present in the modifying agent having been synthesised from radicals of the following formulae:

(A) 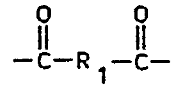

($A_1$) 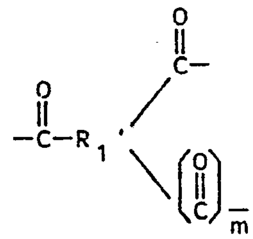

($A_2$) 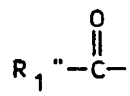

(B) 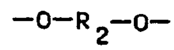

($B_1$ 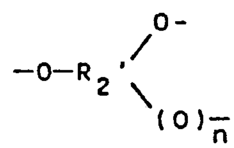

wherein $R_1$ denotes a divalent, saturated aliphatic or cycloaliphatic or aromatic radical,

m denotes the number 1 or 2, preferably 1,

$R_1'$ denotes a saturated aliphatic or cycloaliphatic or aromatic radical which is trivalent if $m = 1$ and is tetravalent if $m = 2$,

$R_1''$ denotes a monovalent, saturated aliphatic or cycloaliphatic or aromatic radical,

$R_2$ denotes a divalent radical,

n denotes a number from 1 to 6, preferably 1 or 2,

$R_2'$ denotes a saturated aliphatic or cycloaliphatic radical which is trivalent if $n = 1$, is tetravalent if $n = 2$ and is pentavalent if $n = 3$, and the polyester has an acid number of 30 to 150,

characterised in that the divalent radical representing $R_2$ is composed, as a statistical average, of 40 - 100 mol % of the radicals $-CH_2-CH_2-O-CH_2-CH_2-$ and/or $-CH_2-CH_2-O-CH_2-CH_2-O-CH_2-CH_2-$, 0 - 50 mol %, preferably 5 - 50 Mol %, of aliphatic, cycloaliphatic or araliphatic radicals and, if appropriate, 0 - 20 mol % of radicals of the formula $-CH_2-CH_2-(O-C_2H_4)_p$ - having an average molecular weight of 300 - 2000 and in that, relative to 100 mol %, of the radicals ($A + A_1 + A_2$), at least 40 mol % are radicals of the formula

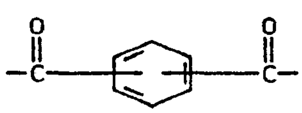

and, relative to 100 mol % of the radicals ($B + B_1$), up to 50 mol % are radicals of the formula $B_1$.

2. The process of Claim 1, characterised in that the aminoplast is a melamine-formaldehyde and/or ureaformaledhyde precondensate.

3. The process of Claims 1 and 2, characterised in that in the condensation an aminoplast precursor: formaldehyde molar ratio of 1: 1.3 to 1: 3 is observed.

4. The process of Claims 1 to 3, characterised in that the modifying agent is a polyester which contains, relative to 100 mol % of the radicals ($A + A_1 + A_2$), 80 to 180 mol % of radicals ($B + B_1$).

5. The process of Claims 1 to 4, characterised in that the modifying agent is a polyester which contains, relative to 100 mol % of the radicals ($A + A_1 + A_2$), up to 40 mol % of radicals ($A_1$).

6. The process of Claims 1 to 5, characterised in that the modifying agent is a polyester which contains, relative to 100 mol % of the radicals ($B + B_1$), up to 50 mol % of the radicals ($B_1$).

7. The process of Claims 1 to 6, characterised in that the modifying agent is a polyester which contains, relative to 100 mol % of the radicals ($B + B_1$), at least 40 mol % of radicals of the formula $-O-CH_2-CH_2-O-CH_2-$

$CH_2$-O- and/or -O-$CH_2$-$CH_2$-O-$CH_2$-$CH_2$-O-$CH_2$-$CH_2$-O-.

8. Use of the modified aminoplast resin prepared according to one or several of Claims 1 to 7 for the production of coated wood-based materials and laminated plastics.

**Revendications**

pour les Etats contractants: DE, BE, FR, GB, IT NL, SE.

1. Aminoplaste modifié constitué de 65 à 97,5 % en poids d'un aminoplaste éthérifié par le radical méthyle à un taux d'au plus 10 %, de 0 à 12,5% en poids d'agents modificateurs connus et de 2,5 à 15% en poids d'un agent modificateur conforme à l'invention, lui-même constitué d'un polyester hydrosoluble, éventuellement en mélange avec des diols ou des polyols libres dans un rapport tel qu'il y ait dans le mélange, pour 1 mole de radicaux carboxy éventuellement estérifiés, de 0,6 à 4,5 mol de radicaux -OH alcooliques éventuellement estérifiés, le polyester contenu dans l'agent modificateur étant formé de radicaux répondant aux formules suivantes:

(A) 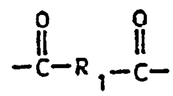

($A_1$) 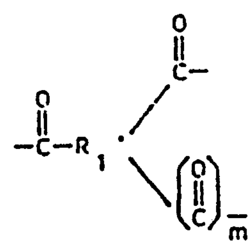

($A_2$) 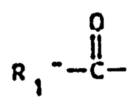

(B) $-O-R_2-O-$

($B_1$) 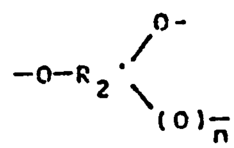

2. Aminoplaste modifié, selon la revendication 1, caractérisé en que l'aminoplaste est un précondensat mélamine- et/ou urée/formaldéhyde.

3. Aminoplaste modifié selon l'une des revendications 1 et 2, caractérisé en ce que le rapport molaire entre le générateur d'aminoplastes et le formaldéhyde est compris entre 1:1,3 et 1:3.

4. Aminoplaste modifié selon l'une quelconque des revendications 1 à 3,caractérisé en ce que le polyester contenu dans l'agent modificateur contient, pour 100% en moles des radicaux ($A + A_1 + A_2$) de 80 à 180% en moles de radicaux ($B + B_1$).

5. Aminoplaste modifié selon l'une quelconque des revendications 1 à 4, caractérisé en ce que le polyester contenu dans l'agent modificateur contient, pour 100% en moles des radicaux ($A + A_1 + A_2$) jusqu'à 40% en moles de radicaux ($A_1$).

6. Aminoplaste modifié selon l'une quelconque des revendications 1 à 5, caractérisé en ce que le polyester contenu dans l'agent modificateur contient, pour 100% en moles des radicaux ($B + B_1$) jusqu'à 50% en moles de radicaux ($B_1$).

7. Aminoplaste modifié selon l'une quelconque des revendications 1 à 6, caractérisé en ce que le polyester contenu dans l'agent modificateur contient, pour 100% en moles des radicaux ($B + B_1$) au moins 40% en moles des radicaux -O-$CH_2$-$CH_2$-O-$CH_2$-$CH_2$-O- et/ou -O-$CH_2$-CH2-O-$CH_2$-$CH_2$-O-$CH_2$-$CH_2$-O-.

8. Procédé de préparation d'un aminoplaste modifié, procédé caractérisé en ce que, pour préparer 100 parties en poids du produit, on ajoute de 0 à 12,5 parties en poids d'agents modificateurs connus et de 2,5 à 15 parties en poids de l'agent modificateur défini à la revendication 1 à une quantité de 85 à 97,5 parties en poids

d'un aminoplaste éthérifié par le radical méthyle à un taux d'au plus dans lesquelles:

$R_1$ représente un radical divalent saturé aliphatique, cycloaliphatique ou aromatique,

m désigne le nombre 1 ou le nombre 2, de préférence le nombre 1,

$R'_1$ représente un radical saturé aliphatique, cycloaliphatique ou aromatique, qui, lorsque m est égal à 1, est trivalent et, lorsque m est égal à 2, est tétravalent,

$R''_1$ représente un radical univalent saturé aliphatique, cycloaliphatique ou aromatique,

$R_2$ représente un radical divalent,

n désigne un nombre de 1 à 6, de préférence 1 ou 2,

$R'_2$ représente un radical saturé aliphatique ou cycloaliphatique qui, lorsque n est égal à 1, est trivalent, lorsque n est égal à 2 est tétravalent et lorsque n est égal à 3 est pentavalent,

et ayant un indice d'acide de 30 à 150, aminoplaste caractérisé en ce que le radical divalent $R_2$ est composé, en moyenne statistique, de 40 à 100% en moles de radicaux $-CH_2-CH_2-O-CH_2-CH_2-$ et/ou $-CH_2-CH_2-O-CH_2-CH_2-O-CH_2-CH_2-$, de 0 à 50% en moles, de préférence de 5 à 50% en moles, de radicaux aliphatiques, cycloaliphatiques ou araliphatiques, et, éventuellement, de 0 à 20% en moles de radicaux de formule $-CH_2-CH_2-(O-C_2H_4)_p-$, avec une masse moléculaire moyenne de 300 à 2000, et, pour 100% en moles des radicaux ($A + A_1 + A_2$), une proportion d'au moins 40% en moles est formée de radicaux de formule:

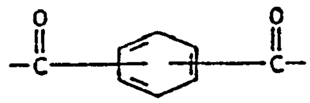

et, pour 100% en moles des radicaux ($B + B_1$), une proportion d'au plus 50% en moles est formée de radicaux de formule $B_1$. 10%, avant, pendant ou après la condensation.

9. Application de la résine aminoplaste modifiée selon l'une quelconque des revendications 1 à 8 pour la fabrication de matériaux dérivés du bois revêtus et de stratifiés moulés.

**Revendications**

pour l'Etat contractant: AT

1. Procédé de préparation d'un aminoplaste modifié constitué de 85 à 97,5% en poids d'un aminoplaste éthérifié par le radical méthyle à un taux d'au plus 10%, de 0 à 12,5% en poids d'agents modificateurs connus et de 2,5 à 15% en poids d'un agent modificateur constitué

d'un polyester hydrosolubles, éventuellement

en mélange avec des diols ou des polyols libres dans un rapport tel qu'il y ait dans le mélange pour 1 mole de radicaux carboxy éventuellement estérifiés, de 0,8 à 4,5 mol de radicaux -OH alcooliques éventuellement estérifiés, le polyester contenu dans l'agent modificateur étant formé de radicaux répondant aux formules suivantes:

(A) 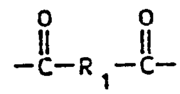

(A$_1$) 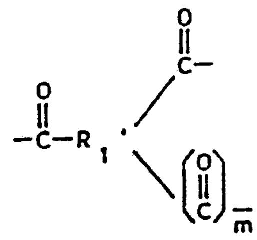

(A$_2$) 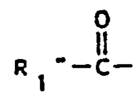

(B) $-O-R_2-O-$

(B$_1$) 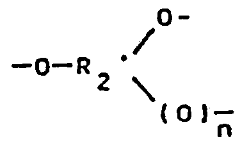

dans lesquelles:

$R_1$ représente un radical divalent saturé aliphatique, cycloaliphatique ou aromatique,

m désigne le nombre 1 ou le nombre 2, de préférence le nombre 1,

$R'_1$ représente un radical saturé aliphatique, cycloaliphatique ou aromatique, qui, lorsque m est égal à 1, est trivalent et, lorsque m est égal à 2 est tétravalent,

$R''_1$ représente un radical univalent saturé aliphatique, cycloaliphatique ou aromatique,

$R_2$ représente un radical divalent,

n désigne un nombre de 1 à 6, de préférence 1 ou 2,

$R'_2$ représente un radical saturé aliphatique ou cycloaliphatique qui, lorsque n est égal à 1 est trivalent, lorsque n est égal à 2 est tétravalent et lorsque n est égal à 3 est pentavalent,

et ayant un indice d'acide de 30 à 150, procédé caractérisé en ce que, pour préparer 100 parties en poids du produit, on mélange avec de 85 à 97,5 parties en poids d'un aminoplaste modifié par le radical méthyle à un taux d'au plus 10%, avant, pendant ou après la condensation, de 0 à 20 parties en poids d'agents modificateurs connus et, également comme agent modificateur de 2,5 à 15 parties en poids d'un polyester du tyoe indiqué dans lequel le radical divalent $R_2$ est composé, en moyenne statistique, de 40 à 100% en moles de radicaux $-CH_2-CH_2-O-CH_2-CH_2-$ et/ou $-CH_2-CH_2-O-CH_2-CH_2-O-CH_2-CH_2-$, de 0 à 50% en moles,de préférence de 5 à 50% en moles, de radicaux aliphatiques, cycloaliphatiques ou araliphatiques, et, éventuellement, de 0 à 20% en moles de radicaux $-CH_2-CH_2-(O-C_2H_4)_p$ avec une masse moléculaire moyenne de 300 à 2000, et, pour 100% en moles des radicaux ($A + A_1 + A_2$), une proportion d'au moins 40% en moles est formée de radicaux de formule:

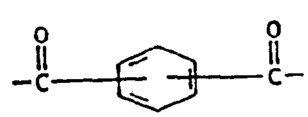

et, pour 100% en moles des radicaux ($B + B_1$) une proportion d'au plus 50% en moles est formée de radicaux de formule $B_1$.

2. Procédé selon la revendication 1, caractérisé en qu'on utilise, comme aminoplaste, un précondensat mélamine- et/ou urée/formaldéhyde.

3. Procédé selon l'une des revendications 1 et 2, caractérisé en ce que, lors de la condensation, on maintient un rapport molaire du générateur d'aminoplastes au formaldéhyde compris entre 1:1,3 et 1:3.

4. Procédé selon l'une quelconque des revendications 1 à 3, caractérisé en ce qu'on utilise, comme agent

modificateur, un polyester qui renferme, pour 100% en moles des radicaux $(A + A_1 + A_2)$, de 80 à 180% en moles de radicaux $(B + B_1)$.

5. Procédé selon l'une quelconque des revendications 1 à 4, caractérisé en ce qu'on utilise, comme agent modificateur, un polyester qui contient, pour 100% en moles des radicaux $(A + A_1 + A_2)$, au plus 40% en moles de radicaux $(A_1)$.

6. Procédé selon l'une quelconque des revendications 1 à 5, caractérisé en ce qu'on utilise, comme agent modificateur, un polyester qui contient, pour 100% en moles des radicaux $(B + B_1)$, au plus 50% en moles de radicaux $(B_1)$.

7. Procédé selon l'une quelconque des revendications 1 à 6, caractérisé en ce qu'on utilise, comme agent modificateur, un polyester qui contient, pour 100% en moles des radicaux $(B + B_1)$, au moins 40% en moles des radicaux $-O-CH_2-CH_2-O-CH_2-CH_2-O-$ et/ou $-O-CH_2-CH_2-O-CH_2-CH_2-O-CH_2-CH_2-O-$.

8. Applications des aminoplastes modifiés qui ont été préparés selon l'une ou plusieurs des revendications 1 à 7 pour la fabrication de matériaux dérivés du bois revêtus et de stratifiés moulés.